(19) Europäisches Patentamt
European Patent Office
Office européen des brevets

(11) **EP 4 306 314 A1**

(12) **EUROPEAN PATENT APPLICATION**
published in accordance with Art. 153(4) EPC

(43) Date of publication:
**17.01.2024 Bulletin 2024/03**

(21) Application number: **22767166.6**

(22) Date of filing: **08.03.2022**

(51) International Patent Classification (IPC):
**B32B 27/00** (2006.01)   **C09J 9/02** (2006.01)
**C09J 11/04** (2006.01)   **C23F 11/00** (2006.01)
**C09J 133/04** (2006.01)   **C09J 201/00** (2006.01)
**C23F 13/02** (2006.01)   **C09J 7/24** (2018.01)
**C09J 7/29** (2018.01)   **C09J 7/38** (2018.01)

(52) Cooperative Patent Classification (CPC):
**B32B 27/00; C09J 7/24; C09J 7/29; C09J 7/38;
C09J 9/02; C09J 11/04; C09J 133/04;
C09J 201/00; C23F 11/00; C23F 13/02**

(86) International application number:
**PCT/JP2022/010105**

(87) International publication number:
**WO 2022/191212 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.03.2021   JP 2021036525
11.06.2021   JP 2021098199
15.10.2021   JP 2021169905**

(71) Applicant: **SEKISUI CHEMICAL CO., LTD.
Osaka-shi
Osaka
530-8565 (JP)**

(72) Inventors:
• **KAJI, Shouji**
**Hasuda-shi, Saitama 349-0198 (JP)**
• **SAKON, Takaaki**
**Hasuda-shi, Saitama 349-0198 (JP)**
• **MIYAMOTO, Shunichi**
**Hasuda-shi, Saitama 349-0198 (JP)**
• **KOMATSU, Hiroaki**
**Hasuda-shi, Saitama 349-0198 (JP)**
• **ISHII, Hinako**
**Hasuda-shi, Saitama 349-0198 (JP)**

(74) Representative: **Ter Meer Steinmeister & Partner
Patentanwälte mbB
Nymphenburger Straße 4
80335 München (DE)**

(54) **ANTICORROSION ADHESIVE TAPE**

(57)   An anticorrosive pressure-sensitive adhesive tape of the present invention comprises a pressure-sensitive adhesive layer, the anticorrosive pressure-sensitive adhesive tape preventing generation of rust in a cyclic corrosion test in accordance with Cycle D in JIS K5600-7-9 and having an adhesive force after the cyclic corrosion test of 20 N/25 mm or more.

The present invention can provide an anticorrosive pressure-sensitive adhesive tape having a superior adhesive force and anticorrosive property than before.

Processed by Luminess, 75001 PARIS (FR)

**Description**

Technical Field

The present invention relates to an anticorrosive pressure-sensitive adhesive tape.

Background Art

Anticorrosive coating materials containing a large amount of zinc are widely used in order to prevent corrosion of iron or an alloy including iron, such as steel. It is known that zinc is a metal having a lower potential than that of iron and that zinc thus exhibits the effect of sacrificial protection and has a high anticorrosive property. However, anticorrosion by a coating material needs a drying process after application, for example, and thus takes time for working, which decreases working efficiency when local repair is carried out in, for example, the use for civil engineering and construction, including bridges. In addition, unevenness in working is likely to occur in anticorrosion by a coating material.

Under the above-described circumstances, approaches for improving workability by imparting sacrificial corrosion resistance to a pressure-sensitive adhesive tape or the like are conventionally carried out. For example, PTL1 discloses a method for prevent corrosion, the method including attaching a laminate composed of a zinc plate, a resin film, a stainless steel plate, and an electroconductive pressure-sensitive adhesive layer containing a zinc powder, to an outer periphery of metal piping. In this method for preventing corrosion, zinc powder included in the pressure-sensitive adhesive layer and the zinc plate serve as sacrificial anodes to prevent corrosion of the metal piping.

PTL2 discloses an anticorrosive member comprising an electroconductive pressure-sensitive adhesive layer that contains an electroconductive material and has a resistance value of a certain value or less, an anticorrosive member comprising the electroconductive pressure-sensitive adhesive layer and a base material, and the like. Use of the anticorrosive members enables both a pressure-sensitive adhesive property and sacrificial corrosion resistance to be favorable.

Citation List

Patent Literature

    PTL1: JP H9-242982 A
    PTL2: JP 2019-127606 A

Summary of Invention

Technical Problem

However, the pressure-sensitive adhesive layer in PTL1 contains 60 to 95 mass% of zinc powder to impart electrical conductivity, and thus the pressure-sensitive adhesive property is low. Accordingly, a band is required in order to fix the laminated body to metal piping, and thus the workability cannot be sufficiently improved.

In the anticorrosive member of PTL2, although the pressure-sensitive adhesive property and sacrificial corrosion resistance are favorable, in terms of highly preventing separation of a steel material or the like from an adherend caused by an influence from the outside such as wind or rain to thereby improve the anticorrosive property, there is required an anticorrosive pressure-sensitive adhesive tape having a higher adhesive force after use over a long period.

Then, a first object of the present invention is to provide an anticorrosive pressure-sensitive adhesive tape having a superior long-term adhesive force and anticorrosive property compared with before.

In the anticorrosive member of PTL2, the pressure-sensitive adhesive property and sacrificial corrosion resistance are made favorable, whereas climate resistance has not been considered. Accordingly, as a result of exposure to light irradiation such as ultraviolet rays over a long period, appearance defects associated with deterioration of the film tend to develop, or the adhesive force tends to decrease in association with deterioration of the pressure-sensitive adhesive layer.

Then, a second object of the present invention is to provide an anticorrosive pressure-sensitive adhesive tape which suffers no occurrence of appearance defects and can maintain its adhesive force at a high level even after exposure to light irradiation over a long period.

For the anticorrosive member of PTL2, the flexibility of the base material has not been sufficiently considered. For this reason, the member cannot conform to the shape of an adherend having a complex shape to thereby fail to sufficiently exert the anticorrosive property.

Then, a third object of the present invention is to provide an anticorrosive pressure-sensitive adhesive tape having an excellent anticorrosive property for an adherend having a complex shape.

Solution to Problem

The present inventors have earnestly studied. As a result, the present inventors have found that the first object described above can be solved by an anticorrosive pressure-sensitive adhesive tape comprising a pressure-sensitive adhesive layer, the anticorrosive pressure-sensitive adhesive tape preventing generation of rust in a specific cyclic corrosion test and having an adhesive force after a cyclic corrosion test of a certain value or more (hereinafter, also referred to as the anticorrosive pressure-sensitive adhesive tape according to the first invention), thus having completed the present invention.

The present inventors further have found that the second object described above can be solved by an anticorrosive pressure-sensitive adhesive tape comprising a base material and a pressure-sensitive adhesive layer provided on one side of the base material, the base material having a gloss retention of 80% or more after a specific accelerated weather resistance test, the anticorrosive pressure-sensitive adhesive tape having an adhesive force after a cyclic corrosion test of 20 N/25 mm or more (hereinafter also referred to as the anticorrosive pressure-sensitive adhesive tape according to the second invention), thus having completed the present invention.

The present inventors also have found that the third object described above can be solved by an anticorrosive pressure-sensitive adhesive tape comprising a base material and a pressure-sensitive adhesive layer provided on at least one side of the base material, the base material having a difference between the tensile loads at 2.5% elongation and at 0.5% elongation of a certain value or less, the base material having a tensile elongation at break of a certain value or more (hereinafter, also referred to as the anticorrosive pressure-sensitive adhesive tape according to the third invention), thus having completed the present invention.

That is, the present invention provides [1] to [18] as follows.

[1] An anticorrosive pressure-sensitive adhesive tape comprising a pressure-sensitive adhesive layer, the anticorrosive pressure-sensitive adhesive tape preventing generation of rust in a cyclic corrosion test in accordance with Cycle D in JIS K5600-7-9 and having an adhesive force after the cyclic corrosion test of 20 N/25 mm or more.

[2] The anticorrosive pressure-sensitive adhesive tape according to [1], further comprising a base material, wherein the pressure-sensitive adhesive layer is provided on one side of the base material.

[3] The anticorrosive pressure-sensitive adhesive tape according to [2], wherein the base material has a gloss retention of 80% or more after an accelerated weather resistance test in accordance with Cycle A in JIS K5600-7-7 is conducted for 500 hours.

[4] The anticorrosive pressure-sensitive adhesive tape according to [2] or [3], wherein the base material has a difference between a tensile load at 2.5% elongation and a tensile load at 0.5% elongation of 30 N/24 mm or less and has a tensile elongation at break of 100% or more.

[5] An anticorrosive pressure-sensitive adhesive tape comprising a base material and a pressure-sensitive adhesive layer provided on one side of the base material, wherein the base material has a gloss retention of 80% or more after an accelerated weather resistance test in accordance with Cycle A in JIS K5600-7-7 is conducted for 500 hours, and an adhesive force after a cyclic corrosion test in accordance with Cycle D in JIS K5600-7-9 is 20 N/25 mm or more.

[6] An anticorrosive pressure-sensitive adhesive tape comprising a base material and a pressure-sensitive adhesive layer provided on at least one side of the base material, wherein the base material has a difference between a tensile load at 2.5% elongation and a tensile load at 0.5% elongation of 30 N/24 mm or less, and a tensile elongation at break of 100% or more.

[7] The anticorrosive pressure-sensitive adhesive tape according to any of [2] to [6], wherein the base material has an Elmendorf tear strength measured by an Elmendorf tear method in accordance with JIS K7128-2 (1998) of 0.6 N or more.

[8] The anticorrosive pressure-sensitive adhesive tape according to any of [2] to [7], wherein the base material is a resin film having a coating film on a surface thereof.

[9] The anticorrosive pressure-sensitive adhesive tape according to any of [2] to [8], wherein the base material is at least one selected from an acrylic film and a fluorine film.

[10] The anticorrosive pressure-sensitive adhesive tape according to any of 1] to [9], wherein the pressure-sensitive adhesive layer has a thickness of 25 μm or more.

[11] The anticorrosive pressure-sensitive adhesive tape according to any of 1] to [10], wherein the pressure-sensitive adhesive layer contains a metal having a lower potential than that of iron.

[12] The anticorrosive pressure-sensitive adhesive tape according to [11], wherein the metal having a lower potential than that of iron is zinc.

[13] The anticorrosive pressure-sensitive adhesive tape according to11] or12], wherein the pressure-sensitive adhesive layer contains an electroconductive material other than the metal having a lower potential than that of iron.

[14] The anticorrosive pressure-sensitive adhesive tape according to [13], wherein the electroconductive material is a carbon nanotube.

[15] The anticorrosive pressure-sensitive adhesive tape according to any of 1] to [14], wherein the pressure-sensitive adhesive layer is made with a pressure-sensitive acrylic adhesive.

[16] The anticorrosive pressure-sensitive adhesive tape according to [1], comprising the pressure-sensitive adhesive layer and a metal layer provided on one side of the pressure-sensitive adhesive layer, the metal layer being a layer of a metal having a lower potential than that of iron.

[17] The anticorrosive pressure-sensitive adhesive tape according to any of [2] to [16], comprising a metal layer between the base material and the pressure-sensitive adhesive layer, the metal layer being a layer of a metal having a lower potential than that of iron.

[18] The anticorrosive pressure-sensitive adhesive tape according to [16] or [17], wherein the metal layer is a layer of zinc.

Advantageous Effects of Invention

The present invention can provide an anticorrosive pressure-sensitive adhesive tape having an excellent long-term adhesive force and anticorrosive property. Another present invention can provide an anticorrosive pressure-sensitive adhesive tape which suffers no occurrence of appearance defects and can maintain its adhesive force at a high level even after exposure to light irradiation over a long period. Further, another present invention can provide an anticorrosive pressure-sensitive adhesive tape having an excellent anticorrosive property for a face to be adhered having a complex shape.

Brief Description of Drawing

[Fig. 1] Fig. 1 is a schematic cross-sectional view illustrating an embodiment of an anticorrosive pressure-sensitive adhesive tape of the present invention.

[Fig. 2] Fig. 2 is a schematic cross-sectional view illustrating another embodiment of the anticorrosive pressure-sensitive adhesive tape of the present invention.

[Fig. 3] Fig. 3 is a schematic cross-sectional view illustrating another embodiment of the anticorrosive pressure-sensitive adhesive tape of the present invention.

[Fig. 4] Fig. 4 is a schematic cross-sectional view illustrating another embodiment of the anticorrosive pressure-sensitive adhesive tape of the present invention.

[Fig. 5] Fig. 5 is a schematic view illustrating a method for evaluating the projection conformability of the anticorrosive pressure-sensitive adhesive tape of the present invention.

Description of Embodiments

[Anticorrosive pressure-sensitive adhesive tape (first invention)]

The anticorrosive pressure-sensitive adhesive tape according to the first invention will be described.

The anticorrosive pressure-sensitive adhesive tape of the present invention is an anticorrosive pressure-sensitive adhesive tape comprising a pressure-sensitive adhesive layer, the anticorrosive pressure-sensitive adhesive tape preventing generation of rust in a cyclic corrosion test in accordance with Cycle D in JIS K5600-7-9 and having an adhesive force after the cyclic corrosion test of 20 N/25 mm or more.

<Presence or absence of rust in cyclic corrosion test>

The anticorrosive pressure-sensitive adhesive tape of the present invention prevents generation of rust in JIS K5600-7-9 (Testing methods for paints - Part 7: Long-period performance of film - Section 9: Determination of resistance to cyclic corrosion conditions - Salt Fog/dry/humidity, Cycle D). Thus, the anticorrosive pressure-sensitive adhesive tape of the present invention has an excellent anticorrosive property. Formation of rust in the cyclic corrosion test makes the anticorrosive property of the anticorrosive pressure-sensitive adhesive tape insufficient. Formation of rust can be suppressed by adjusting the composition, thickness, and the like of the pressure-sensitive adhesive layer included in the anticorrosive pressure-sensitive adhesive tape.

Presence or absence of formation of rust in the cyclic corrosion test can be checked as follows.

The anticorrosive pressure-sensitive adhesive tape of the present invention is attached to a test plate specified in JIS K5600-7-9 to prepare a test piece. In this case, the test piece is prepared by attaching the tape such that the test plate surface is brought into contact with the pressure-sensitive adhesive layer of the anticorrosive pressure-sensitive adhesive tape. The size of the anticorrosive pressure-sensitive adhesive tape is 150 mm in length and 70 mm in width.

Then, a cut scratch is made on the test piece from the side of the anticorrosive pressure-sensitive adhesive tape. The cut scratch is formed by making two linear scratches so as to be crossed with each other (i.e., scratches are made like a cross mark). In this case, each of the scratches is allowed to have a length of 70 mm, and the two scratches are crossed at an angle of 90°C. The cut scratch is imparted using a single-blade cutter so as to reach the test plate as the base, as specified in JIS K5600-7-9.

Thereafter, the test piece having the cut scratch is subjected to a salt water spraying test based on Cycle D in Appendix I of JIS K5600-7-9. The test is performed in 28 cycles (168 hours in total).

The test piece after the salt water spraying test is observed to check presence or absence of rust in the cut scratch portion.

<Adhesive force after cyclic corrosion test>

The anticorrosive pressure-sensitive adhesive tape of the present invention has an adhesive force after the cyclic corrosion test of 20 N/25 mm or more. When the adhesive force is less than 20 N/25 mm, the long-term adhesive force will be insufficient, the anticorrosive pressure-sensitive adhesive tape is more likely to be separated from an adherend such as steel material, and thus the anticorrosive property is degraded.

In terms of improving the adhesive force to improve the anticorrosive property, the adhesive force after the cyclic corrosion test is preferably 25 N/25 mm or more, more preferably 30 N/25 mm or more, and further preferably 40 N/25 mm or more. The adhesive force is preferably as high as possible and is practically 200 N/25 mm or less.

The adhesive force after the cyclic corrosion test of the anticorrosive pressure-sensitive adhesive tape is measured as follows.

The anticorrosive pressure-sensitive adhesive tape of the present invention is attached to a stainless plate (SUS plate) to prepare a specimen for adhesive force evaluation. In this case, the specimen for adhesive force evaluation is prepared by attaching the tape such that the SUS plate surface is brought into contact with the pressure-sensitive adhesive layer of the anticorrosive pressure-sensitive adhesive tape. The size of the anticorrosive pressure-sensitive adhesive tape is 100 mm in length and 25 mm in width.

The specimen for adhesive force evaluation is subjected to a salt water spraying test based on Cycle D in Appendix I of JIS K5600-7-9. The test is performed in 28 cycles (168 hours in total).

The specimen for adhesive force evaluation after the salt water spraying test is subjected to a peeling test of the anticorrosive pressure-sensitive adhesive tape for measuring the adhesive force. The peeling test is performed with a tensile tester under an environment of 23°C and 50 RH% under conditions of a peeling angle of 180° and a rate of 300 mm/min, and an average value of loads (N) detected over that interval is used as the adhesive force.

<Gloss retention after accelerated weather resistance test>

It is preferred that the anticorrosive pressure-sensitive adhesive tape of the present invention further comprise a base material and that a pressure-sensitive adhesive layer be provided on one side of the base material.

In this case, in terms of improvement in weather resistance, the base material preferably has a gloss retention of 80% or more after subjected to an accelerated weather resistance test in accordance with Cycle A in JIS K5600-7-7 for 500 hours. With a gloss retention of 80% or more, when the anticorrosive pressure-sensitive adhesive tape is irradiated with light over a long period, proceeding of deterioration of the base material itself is suppressed, whereby the appearance of the anticorrosive pressure-sensitive adhesive tape can be made unlikely to worsen. Additionally, the base material blocks light such as sunlight (particularly ultraviolet rays) to suppress deterioration of the pressure-sensitive adhesive layer, whereby the anticorrosive pressure-sensitive adhesive tape can maintain its adhesive force.

Considering this respect, the gloss retention of the base material constituting the anticorrosive pressure-sensitive adhesive tape of the present invention is preferably 85% or more and more preferably 90% or more. A higher gloss retention is more preferable, and its upper limit is 100%.

The gloss retention of the anticorrosive pressure-sensitive adhesive tape after the accelerated weather resistance test can be measured by the following method.

An anticorrosive pressure-sensitive adhesive tape (25 mm in width and 100 mm in length) is attached, and the specular glossiness is measured with respect to the surface of the tape from the base material side with a gloss meter (e.g., product name: "IG-340" manufactured by HORIBA, Ltd.). The specular glossiness is measured using a gloss meter of a geometric condition of 60° in accordance with JIS K5600-4-7. The specular glossiness obtained by the measurement at this time is used as a specular glossiness A. Thereafter, the tape is subjected to an accelerated weather resistance test in accordance with Cycle A in JIS K5600-7-7 for 500 hours. After the accelerated weather resistance test is performed, the specular glossiness of the base material of the tape is measured by the same method as performed before the test. The specular glossiness obtained in the measurement after the test is used as a specular glossiness B. From the two specular glossinesses obtained as above, the gloss retention of the base material of the tape is calculated. The expression for determining the gloss retention is as follows.

$$\text{Gloss retention (\%)} = (\text{specular glossiness B/specular glossiness A}) \times 100$$

<Adhesive force loss>

The anticorrosive pressure-sensitive adhesive tape of the present invention has an adhesive force loss according to a cyclic corrosion test in accordance with Cycle D in JIS K5600-7-9 of preferably 15% or less, more preferably 10% or less, and further preferably 6% or less. When the adhesive force loss is equal to or less than the upper limit described above, the adhesive force of the anticorrosive pressure-sensitive adhesive tape can be kept at a predetermined value or more. The adhesive force loss of the anticorrosive pressure-sensitive adhesive tape is preferably as low as possible and may be 0% or more.

The adhesive force loss can be determined from the initial adhesive force before the cyclic corrosion test and the adhesive force after the cyclic corrosion test by the following expression.

$$\text{Adhesive force loss (\%)} = (\text{initial adhesive force - adhesive force after the test})/\text{initial adhesive force} \times 100$$

<Difference between tensile loads>

The base material of the anticorrosive pressure-sensitive adhesive tape of the present invention preferably has a difference between the tensile load at 2.5% elongation and the tensile load at 0.5% elongation (hereinafter, simply referred to as the "difference between tensile loads") of 30 N/24 mm or less. The difference between tensile loads means the tensile load per 2% elongation substantially in the elastic region. When the value of the difference between tensile loads is small, the tape conforms to an adherend and is more easily attached thereto. Additionally, even when the tape is stretched and attached to an adherend, a stress due to shrinkage or the like is unlikely to occur after the attachment, and thus the adhesiveness after the attachment increases.

When the difference between tensile loads is 30 N/24 mm or less, in the case in which the anticorrosive pressure-sensitive adhesive tape is closely attached to an adherend having a complex shape such as a welded portion after welding of piping, occurrence of shrinkage in the anticorrosive pressure-sensitive adhesive tape is suppressed to thereby make the close attachment of the anticorrosive pressure-sensitive adhesive tape favorable. The tape becomes easier to attach in conformance to an adherend having a complex shape. Considering this respect, the difference between tensile loads is preferably 27 N/24 mm or less and more preferably 25 N/24 mm or less. The lower limit of the difference between tensile loads is not particularly limited, and is preferably 1 N/24 mm or more and more preferably 3 N/24 mm or more in terms of imparting a certain mechanical strength.

The difference between tensile loads is to be measured each in the MD and the TD of the base material, and the larger of the values is to be employed. When it is not known whether the direction is the MD or the TD, the largest value of the differences between tensile loads may be employed. The difference between tensile loads can be measured by the method described in the example.

<Tensile elongation at break>

The base material for use in the anticorrosive pressure-sensitive adhesive tape of the present invention preferably has a tensile elongation at break of 100% or more. When the tensile elongation at break of the base material is 100% or more, in an attempt of depositing the anticorrosive pressure-sensitive adhesive tape to a side having a complex shape, occurrence of a tear in the anticorrosive pressure-sensitive adhesive tape is suppressed, and the adhesiveness of the anticorrosive pressure-sensitive adhesive tape to the adherend is more likely to be favorable. Considering this respect, the tensile elongation at break of the base material is preferably 200% or more and more preferably 300% or more.

On the other hand, the upper limit of the tensile elongation at break of the base material is not particularly limited and is preferably 1500% or less and more preferably 1000% or less in terms of mechanical strength and the like.

The tensile elongation at break is to be measured each in the MD and the TD of the base material, and the smaller of the values is to be employed. When it is not known whether the direction is the MD or the TD, the smallest tensile elongation at break value may be employed. The tensile elongation at break can be measured by the method described in the example.

< Elmendorf tear strength>

The base material for use in the anticorrosive pressure-sensitive adhesive tape of the present invention preferably has an Elmendorf tear strength of 0.6 N or more. When the Elmendorf tear strength of the base material is 0.6 N or more, in an attempt of depositing the anticorrosive pressure-sensitive adhesive tape to a side having a complex shape, occurrence of a tear in the anticorrosive pressure-sensitive adhesive tape is suppressed, and the adhesiveness of the anticorrosive pressure-sensitive adhesive tape to the adherend is more likely to be favorable. Considering this respect, the Elmendorf tear strength of the base material is preferably 0.8 N or more and more preferably 1 N or more.

On the other hand, the upper limit of the Elmendorf tear strength of the base material is not particularly limited and is preferably 5 N or less and more preferably 3 N or less in terms of mechanical strength and the like.

The Elmendorf tear strength is to be measured each in the MD and the TD of the base material, and the smaller of these is to be employed. When it is not known whether the direction is the MD or the TD, the smallest Elmendorf tear strength value may be employed. The Elmendorf tear strength can be measured by an Elmendorf tear method in accordance with JIS K7128-2 (1998).

The difference between tensile loads, tensile elongation at break, and Elmendorf tear strength of the base material can be adjusted to fall within the above-described ranges by appropriately selecting the materials to be used in the base material, the thickness of the base material, and the like.

<Materials to be used in base material>

Examples of the base material to be used in the present invention include sheet-like materials such as a resin film and non-woven fabric.

Examples of the resin film include polyolefinic resin films such as a polypropylene resin film, a polyethylene resin film, and an ethylene/vinyl acetate copolymer (EVA) resin film, a polyester resin film, a polyamide resin film, an acrylic resin film, a polyurethane resin film, a polystyrene resin film, a polyvinyl chloride resin film, an ethylene vinyl acetate resin film, an acrylonitrile resin film, a fluorine film, a polycarbonate film, an AES resin film, and an ASA resin film.

The non-woven fabric is non-woven fabric comprising synthetic resin fiber, for example, polyamide, polyester, polyacrylic, polyolefin, or polyurethane fiber.

These sheet-like materials can be used singly or in combinations of two or more thereof. The base material is preferably a resin film in terms of protection of the pressure-sensitive adhesive layer and in terms of improving the conformability and adhesiveness of the tape to an adherend.

The resin film may be a single-layer film or may be a multilayer film constituted by laminating two or more of the films described above.

In terms of improvement in the weather resistance, an ultraviolet absorber, a light stabilizer (HALS), and the like may be incorporated into the resin constituting the base material. Also, in terms of improvement in the weather resistance, the base material may be a resin film having a coating film on the surface thereof. The coating film is preferably a weather-resistant coating film. The weather-resistant coating film may include at least one selected from an ultraviolet absorber and a light stabilizer.

The base material to be used in the present invention is preferably a resin film among those described above in terms of improvement in the weather resistance. For example, an acrylic film, a fluorine film, a polycarbonate film, a polyvinyl chloride film, an AES resin film, an ASA resin film, or the like is preferably used. Use of these base materials can impart weather resistance to the base materials without use of an ultraviolet absorber and a light stabilizer and without application of a weather-resistant coating. Accordingly, bleeding-out of an ultraviolet absorber and a light stabilizer can be prevented. It is also possible to save the effort of applying a coating on the surface of the base material to thereby improve the production efficiency of the anticorrosive pressure-sensitive adhesive tape.

Of these base materials, at least one selected from an acrylic film and a fluorine film is preferably used.

An acrylic film is particularly excellent in protection of the pressure-sensitive adhesive layer because the intermolecular bonding force in the acrylic resin as the main component is strong and the ultraviolet transmission thereof is low. A fluorine film has higher weather resistance because of the strong intermolecular bonding force between a fluorine atom and a different molecule.

As the base material to be used in the present invention, among those described above, in terms of enhancing the conformability and adhesiveness of the tape to an adherend, a polyolefinic resin film is preferred, and a polypropylene resin film, a polyethylene resin film, an EVA resin film, or a multilayer film of two or more films selected from these is more preferred. When a polyethylene resin film is used as the base material, polyethylene to be used is not particularly limited, and examples thereof include low-density polyethylene (LDPE, density: less than 0.930 g/cm$^3$), medium-density polyethylene (MDPE, density: 0.930 g/cm$^3$ or more and less than 0.942 g/cm$^3$), high-density polyethylene (HDPE, density: 0.942 g/cm$^3$ or more), and linear low-density polyethylene (LLDPE). Among these, LDPE, MDPE, and LLDPE are preferred.

<Thickness of base material>

The thickness of the base material is not particularly limited and is preferably 10 to 1000 $\mu$m, more preferably 20 to 400 $\mu$m, further preferably 20 to 100 $\mu$m, and further preferably 25 to 80 $\mu$m. When the thickness of the base material is equal to or more than these lower limits, the base material can serve a function as a support and is also more likely to protect the pressure-sensitive adhesive layer appropriately from ultraviolet radiation and the like. When the thickness of the base material is equal to or more than these upper limits, the workability will be enhanced to thereby make the tape easier to handle.

<Pressure-sensitive adhesive layer>

The anticorrosive pressure-sensitive adhesive tape of the present invention comprises a pressure-sensitive adhesive layer. The pressure-sensitive adhesive layer will be described below. With respect to the pressure-sensitive adhesive layer, the same applies to all of the anticorrosive pressure-sensitive adhesive tape according to the first invention, the anticorrosive pressure-sensitive adhesive tape according to the second invention, and the anticorrosive tape according to the third invention.

Accordingly, the description on the pressure-sensitive adhesive layer in the anticorrosive pressure-sensitive adhesive tape according to the first invention to be described below is applied also to the pressure-sensitive adhesive layers in the anticorrosive pressure-sensitive adhesive tapes according to the second invention and the third invention mentioned below.

(Metal having a lower potential than that of iron)

The pressure-sensitive adhesive layer in the present invention preferably comprises a metal having a lower potential than that of iron. Since the metal having a lower potential than that of iron (hereinafter, also referred to as a "sacrificial protection metal") is contained, the pressure-sensitive adhesive layer has the sacrificial corrosion resistance and increases the anticorrosive property of the anticorrosive pressure-sensitive adhesive tape. The sacrificial protection metal is dispersed in the pressure-sensitive adhesive forming the pressure-sensitive adhesive layer.

Examples of the sacrificial protection metal include cadmium, chrome, zinc, manganese, and aluminum. Among these, zinc and aluminum are preferable, and zinc is particularly preferable. When zinc is used, the sacrificial corrosion resistance is excellent.

The sacrificial protection metal, which is dispersed as a filler in the pressure-sensitive adhesive, may be in any form, such as a particulate form, a scale-like form, or a spindle-like form, and is preferably in a particulate form. The sacrificial protection metal in a particulate form is easily dispersed in the pressure-sensitive adhesive layer with almost no decrease in the pressure-sensitive adhesivity of the pressure-sensitive adhesive layer.

Herein, a particulate form means a form having a small ratio of the length in the major axial direction to the length in the minor axial direction (aspect ratio), and the aspect ratio is, for example, 3 or less, and is preferably 2 or less. The particulate form is not particularly limited and may be a spherical shape or irregular shape such as a powder. The above-described metal in a particulate form has a particle size of, for example, 1 to 500 $\mu$m and preferably, 1 to 200 $\mu$m. The particle size herein means an average particle size determined by the laser diffraction method.

The content of the sacrificial protection metal in the pressure-sensitive adhesive layer is 0.5 to 20 mass%, for example, preferably 1 to 12 mass%, and more preferably 2 to 10 mass%, based on the total mass of the pressure-sensitive adhesive layer.

When the sacrificial protection metal content is equal to or more than any of these lower limits, the anticorrosion performance is improved by an increase in the sacrificial corrosion resistance, and when the content is equal to or less than any of these upper limits, the adhesive force is improved.

The pressure-sensitive adhesive layer also preferably contains no sacrificial protection metal. In the case of containing no sacrificial protection metal, in comparison with the case of containing one, the pressure-sensitive adhesive layer is more unlikely to be separated from an adherend by maintaining the adhesive force of the anticorrosive pressure-sensitive adhesive tape high. Thereby water and oxygen are blocked, and the anticorrosive property is more likely to be improved.

(Electroconductive material)

The pressure-sensitive adhesive layer preferably further contains an electroconductive material other than the sacrificial protection metal described above, in addition to the sacrificial protection metal. When the pressure-sensitive adhesive layer is allowed to contain an electroconductive material, it becomes easier to transfer electrons, emitted when the sacrificial protection metal is ionized, onto the adherend to thereby easily improve the sacrificial corrosion resistance.

Examples of the electroconductive material include one or two or more selected from a carbon material, a metal material, a metal oxide material, an ionic polymer, and an electroconductive polymer.

Examples of the carbon material include carbon black, graphite, graphene, carbon nanotube, and acetylene black. Examples of the metal material include iron, and a metal having a higher potential than that of iron, such as gold, silver, copper, nickel, or an alloy including any of these. Examples of the metal oxide material include indium tin oxide (ITO), antimony trioxide (ATO), fluorine-doped tin oxide (FTO), and zinc oxide. Examples of the electroconductive polymer include polyacetylene, polypyrrole, PEDOT (polyethylene dioxythiophene), PEDOT/PSS (a composite of polyethylene dioxythiophene and polystyrene sulfonic acid), polythiophene, polyaniline, poly(p-phenylene), polyfluorene, polycarbazole, polysilane, or a derivative thereof. Examples of the ionic polymer include sodium polyacrylate and potassium polyacrylate.

These electroconductive materials may be used singly or in combinations of two or more thereof.

Among those described above, as the electroconductive material, carbon materials are preferred, and carbon nanotubes are more preferred.

(Carbon nanotube)

The pressure-sensitive adhesive layer preferably contains a carbon nanotube. Since the carbon nanotube is contained, the sacrificial corrosion resistance of pressure-sensitive adhesive layer can be enhanced and the adhesive force can be maintained at a high level; accordingly, an anticorrosive pressure-sensitive adhesive tape having both the adhesive force and the sacrificial corrosion resistance at higher levels can be obtained easily. The reason for this is probably as follows: although carbon nanotube is an electroconductive material, the amount of carbon nanotube necessary for developing the sacrificial corrosion resistance at a certain level is smaller than that of other kinds of the electroconductive material, and thus the extent of the decrease in the adhesive force by carbon nanotube is smaller.

The carbon nanotube is a material in a tube form that is made of carbon. The carbon nanotube is excellent in the electrical properties, and can be combined with a resin or the like to form, for example, a sheet having a high electroconductivity. The carbon nanotube is a substance having a structure in which a graphite sheet is cylindrically rolled up, the graphite sheet having a carbon atomic arrangement in the form of a reticulated pattern of hexagons. A mono-layered roll is called a single-wall carbon nanotube, and a multi-layered roll is called a multi-wall carbon nanotube.

In the anticorrosive pressure-sensitive adhesive tape of one embodiment of the present invention, the kind of the carbon nanotube is not particularly limited, and may be any of a single-wall carbon nanotube, a multi-wall carbon nanotube, and a mixture including them in an arbitral ratio. The carbon nanotube can be used that are produced by any of various methods including an arc discharge method, a laser evaporation method, and a chemical vapor deposition method (CVD method).

The average diameter of the carbon nanotube is preferably 1 to 100 nm, and more preferably 2 to 15 nm. The average length of the carbon nanotube is preferably 0.1 to 1000 $\mu$m, and more preferably 10 to 500 $\mu$m. The aspect ratio (average length/ average diameter) of the carbon nanotube is preferably 10 to 100000, and more preferably 500 to 30000.

The diameter of the carbon nanotube means the outer diameter in a case of a single-wall carbon nanotube, and the outer diameter of the outermost tube in a case of a multi-wall carbon nanotube. The diameter and the length of the carbon nanotube may be measured in an image obtained by observation under a transmission electron microscope (TEM), for example, and the average diameter and the average length may be determined as an arithmetic average on arbitral fifty nanotubes.

In terms of the sacrificial corrosion resistance and adhesive force of the pressure-sensitive adhesive layer, the content of the electroconductive material in the pressure-sensitive adhesive layer is preferably 0.005 to 10 mass%, more preferably 0.005 to 5 mass%, further preferably 0.006 to 3 mass%, and further preferably 0.006 to 2 mass%, based on the total mass of the pressure-sensitive adhesive layer.

When the electroconductive material is a carbon nanotube, the content of the carbon nanotube in the pressure-sensitive adhesive layer is preferably 0.0005 to 0.7 mass%, more preferably 0.005 to 0.05 mass%, and further preferably 0.006 to 0.045 mass%, based on the total mass of the pressure-sensitive adhesive layer.

When the carbon nanotube content is equal to or more than any of these lower limits, the sacrificial corrosion resistance is likely to be enhanced, and when the carbon nanotube content is equal to or less than any of these upper limits, the adhesive force is likely to be enhanced.

(Pressure-sensitive adhesive)

The pressure-sensitive adhesive layer is preferably made with a pressure-sensitive adhesive. The kind of the pressure-sensitive adhesive is not particularly limited, and examples thereof include a pressure-sensitive acrylic adhesive, a pressure-sensitive rubber adhesive, a pressure-sensitive urethane adhesive, and a pressure-sensitive silicone adhesive. These may be used singly or may be used in combination.

The pressure-sensitive adhesive layer is preferably made with the pressure-sensitive acrylic adhesive among them.

(Pressure-sensitive acrylic adhesive)

The pressure-sensitive acrylic adhesive is a pressure-sensitive adhesive containing an acrylic polymer obtained by polymerizing a polymerizable monomer including an alkyl (meth)acrylate monomer (A).

The term "alkyl (meth)acrylate" herein has a concept encompassing both alkyl acrylate and alkyl methacrylate, and this is also applied to other similar terms mutatis mutandis. The term "polymerizable monomer" has a concept that may encompass not only a compound having no repeating unit but also a monomer itself having a repeating unit, such as an olefin polymer (C), which will be described later, as long as the monomer is a compound copolymerizable with the alkyl (meth)acrylate monomer (A).

(Alkyl (meth)acrylate monomer (A))

The alkyl (meth)acrylate monomer (A) is an ester between (meth)acryl acid and an aliphatic alcohol, and is preferably an alkyl ester derived from an aliphatic alcohol having an alkyl group preferably having 2 to 14 carbon atoms, and more preferably 4 to 10 carbon atoms. When the number of carbon atoms of the alkyl group is within this range, the adhesive force is easily enhanced, and the storage modulus at 23°C of a pressure-sensitive adhesive described below is easily adjusted to fall within a predetermined range.

Specific examples of the alkyl (meth)acrylate monomer (A) include ethyl (meth)acrylate, n-propyl (meth)acrylate, isopropyl (meth)acrylate, n-butyl (meth)acrylate, isobutyl (meth)acrylate, t-butyl (meth)acrylate, pentyl (meth)acrylate, hexyl (meth)acrylate, heptyl (meth)acrylate, 2-ethylhexyl (meth)acrylate, n-octyl (meth)acrylate, isooctyl (meth)acrylate, nonyl (meth)acrylate, decyl (meth)acrylate, undecyl (meth)acrylate, dodecyl (meth)acrylate, tridecyl (meth)acrylate, and tetradecyl (meth)acrylate.

Among these, n-butyl (meth)acrylate, hexyl (meth)acrylate, heptyl (meth)acrylate, 2-ethylhexyl (meth)acrylate, and n-octyl (meth)acrylate are preferable, and n-butyl (meth)acrylate, 2-ethylhexyl (meth)acrylate, or a combination thereof are more preferable.

The alkyl (meth)acrylate monomers may be used singly or may be used in combinations of two or more thereof.

The constituent unit derived from the alkyl (meth)acrylate monomer (A) is the main component of the pressure-sensitive adhesive layer, and the content thereof is generally 30 mass% or more, preferably 50 mass% or more, and more preferably 70 mass% or more, based on the total mass of the pressure-sensitive adhesive layer. Such a large content of the alkyl (meth)acrylate monomer (A) can impart the desirable adhesive force to the pressure-sensitive adhesive layer. The above-described content of the constituent unit derived from the alkyl (meth)acrylate monomer (A) is, for example, 97 mass% or less, preferably 95 mass% or less, and more preferably 90 mass% or less, in order for a certain amount or more of other components to be contained.

The content of the constituent unit derived from the alkyl (meth)acrylate monomer (A) in the pressure-sensitive adhesive layer is substantially the same as the content of the alkyl (meth)acrylate monomer (A) in a pressure-sensitive adhesive composition, which will be described later, and accordingly, the former can be expressed by replacing with the latter. The same also applies to the components other than the component (A), including the components (B) and (C), which will be described below.

(Polar group-containing vinyl monomer (B))

The polymerizable monomer preferably contains a polar group-containing vinyl monomer (B) in addition to the alkyl (meth)acrylate monomer (A). The polar group-containing vinyl monomer (B) has a polar group and a vinyl group. The adhesive force to an adherend is easily improved by using the polar group-containing vinyl monomer (B).

Examples of the polar group-containing vinyl monomer (B) include a vinyl carboxylate such as vinyl acetate; a vinyl group-containing carboxylic acid such as (meth)acrylic acid and itaconic acid, and an anhydride thereof; a vinyl monomer having a hydroxyl group such as 2-hydroxyethyl (meth)acrylate, 2-hydroxypropyl (meth)acrylate, 4-hydroxybutyl (meth)acrylate, caprolactone-modified (meth)acrylate, polyoxyethylene (meth)acrylate, and polyoxypropylene (meth)acrylate; and a nitrogen-containing vinyl monomer such as (meth)acrylonitrile, N-vinylpyrrolidone, N-vinylcaprolactam, N-vinyllaurilolactam, (meth)acryloylmorpholin, (meth) acrylamide, dimethyl (meth)acrylamide, N-methylol (meth)acrylamide, N-butoxy methyl (meth)acrylamide, and dimethylaminomethyl (meth)acrylate.

Among these, a vinyl group-containing carboxylic acid such as (meth)acrylic acid and itaconic acid, and an anhydride thereof are preferable. (Meth)acrylic acid is more preferable, and acrylic acid is further preferable. These for the polar group-containing vinyl monomer (B) may be used singly or may be used in combinations of two or more thereof.

In a case where the polar group-containing vinyl monomer (B) is used, the content of the constituent unit derived from the polar group-containing vinyl monomer (B) in the pressure-sensitive adhesive layer is preferably 1 to 15 parts by mass, more preferably 2 to 12 parts by mass, and further preferably 3 to 10 parts by mass, per 100 parts by mass of the constituent unit derived from the alkyl (meth)acrylate monomer (A). The adhesive force of the anticorrosive pressure-sensitive adhesive tape is easily improved when the content of the polar group-containing vinyl monomer (B) is within such a range.

(Olefin polymer (C))

Preferably, the polymerizable monomer further includes an olefin polymer having a polymerizable bond on one end, (C). The adhesive force of the anticorrosive pressure-sensitive adhesive tape is easily enhanced by using such an olefin polymer (C).

The polymerizable bond means an unsaturated carbon-carbon bond that is capable of polymerizing with a polymerizable monomer. Examples thereof include an unsaturated double bond, and preferable examples thereof include a (meth)acryloyl group.

Examples of the olefin polymer (C) include a polyolefin having a (meth)acryloyl group on one end. The polyolefin means a polymer of an aliphatic hydrocarbon compound having a double bond, such as ethylene, propylene, butane, butadiene, or isoprene, or a hydrogenated product thereof.

Examples of the polyolefin having a (meth)acryloyl group on one end include a polyethylene having a (meth)acryloyl group on one end that is prepared by reacting a polyethylene having an epoxy group on one end with (meth)acrylic acid. Other examples include a polybutadiene having a (meth)acryloyl group on one end and a hydrogenated product thereof, and examples of a commercially available product thereof include "L-1253" manufactured by KURARAY CO., LTD.

The olefin polymer (C) preferably has a number-average molecular weight of 500 to 20000, and more preferably 1000 to 10000. The number-average molecular weight may be measured by gel permeation chromatography (GPC) and calculated using a calibration curve of standard polystyrene.

The content of the constituent unit derived from the olefin polymer (C) in the pressure-sensitive adhesive layer is preferably 1 to 20 parts by mass, more preferably 2 to 15 parts by mass, and further preferably 4 to 12 parts by mass, per 100 parts by mass of the constituent unit derived from the alkyl (meth)acrylate monomer (A).

(Crosslinking agent (D))

Preferably, the polymerizable monomer further includes a crosslinking agent. Example of the crosslinking agent include a polyfunctional monomer having two or more vinyl groups, and preferable examples include a polyfunctional (meth)acrylate having two or more (meth)acryloyl groups. The adhesive force of the pressure-sensitive adhesive layer is easily adjusted to fall within an appropriate range by using the polyfunctional monomer.

Examples of the polyfunctional (meth)acrylate include, but not limited to, hexanediol di(meth)acrylate, ethoxylated bisphenol A di(meth)acrylate, triacrylate of tris(2-hydroxyethyl) isocyanurate, ethoxylated trimethylolpropane triacrylate, proxyated trimethylolpropane triacrylate, proxiled glyceryl triacrylate, diacrylate of neopentyl glycol adipate, and also polymers, such as polyethylene glycol di(meth)acrylate, polypropylene glycol di(meth)acrylate, and liquid hydrogenated 1,2-polybutadiene di(meth)acrylate. Among these polyfunctional (meth)acrylates, the polymer is preferable, and liquid hydrogenated 1,2-polybutadiene di(meth)acrylate is more preferable. Examples of a commercially available product of liquid hydrogenated 1,2-polybutadiene diacrylate include "TEAI-1000" manufactured by NIPPON SODA CO., LTD.

The content of the constituent unit derived from the crosslinking agent in the pressure-sensitive adhesive layer is preferably 0.1 to 4 parts by mass, more preferably 0.3 to 3 parts by mass, and further preferably 0.5 to 2 parts by mass, per 100 parts by mass of the constituent unit derived from the alkyl (meth)acrylate monomer (A).

(Tackifier resin)

The pressure-sensitive acrylic adhesive may contain a tackifier resin in terms of improving the adhesive force. The tackifier resin is preferably a tackifier resin having less capability of inhibiting polymerization, including hydrogenated terpene resin, hydrogenated rosin, disproportionated rosin resin, and petroleum resin. Since a tackifier resin having many double bonds inhibits the polymerization reaction, a hydrogenated tackifier resin is preferable among the above, and a hydrogenated petroleum resin is particularly preferable.

The softening point of the tackifier resin may be about 95°C or more in terms of improving the cohesive force and the adhesive force of the pressure-sensitive adhesive. The tackifier resin preferably includes that having a softening point of 120°C or more, and for example, that having a softening point of 95°C or more and less than 120°C and that having a softening point of 120°C or more and 150°C or less may be used in combination. The softening point can be measured by the ring-and-ball test method defined by JIS K2207.

The content of the tackifier resin in the pressure-sensitive acrylic adhesive is preferably 5 to 40 parts by mass, more preferably 7 to 35 parts by mass, and further preferably 10 to 25 parts by mass, per 100 parts by mass of the constituent unit derived from the alkyl (meth)acrylate monomer (A).

(Fine particle)

The pressure-sensitive acrylic adhesive may contain a fine particle. The adhesive force can be enhanced when the fine particle is contained.

Examples of the fine particle include an inorganic hollow particles such as a glass balloon, a shirasu balloon, and a fly ash balloon; an organic hollow particles made of polymethyl methacrylate, acrylonitrile/vinylidene chloride copolymer, polystyrene, phenolic resin, etc.; an inorganic fine particle such as glass beads, silica beads, and synthetic mica; and an organic fine particle made of ethyl polyacrylic acid, polyurethane, polyethylene, polypropylene, etc.

The content of the fine particle in the pressure-sensitive acrylic adhesive is preferably 0.1 to 15 parts by mass, more preferably 0.5 to 10 parts by mass, and further preferably 0.7 to 5 parts by mass, per 100 parts by mass of the constituent unit derived from the alkyl (meth)acrylate monomer (A).

(Other components)

In addition to the components described hereinabove, the pressure-sensitive acrylic adhesive used in the pressure-sensitive adhesive layer may contain various additives conventionally used for a pressure-sensitive adhesive, including a plasticizer, a softener, a pigment, a dye, a photopolymerization initiator, and a flame retardant.

(Method for producing pressure-sensitive acrylic adhesive and pressure-sensitive adhesive layer)

The pressure-sensitive acrylic adhesive can be obtained by irradiating a pressure-sensitive adhesive composition with light to polymerize the polymerizable monomer, the composition including the polymerizable monomer described above, and a sacrificial protection metal, and an electroconductive material, which are used as necessary. The pressure-sensitive adhesive composition may also include at least one from the tackifier resin, the fine particle, and the other components, which have been described hereinabove, as necessary.

The method will be described more specifically. First, to a reaction container, such as a glass container, are put the polymerizable monomer, the sacrificial protection metal and the electroconductive material, which are added as necessary, as well as the tackifier resin, the fine particle, and the other components, which are added as necessary, and these are mixed to obtain a pressure-sensitive adhesive composition.

Next, in order to remove dissolved oxygen in the pressure-sensitive adhesive composition, an inert gas such as a nitrogen gas, generally, is fed thereto to purge oxygen. Then, the pressure-sensitive adhesive composition is applied to a release sheet or to, for example, a support such as a resin film, woven fabric, or non-woven fabric, and thereafter irradiated with light to polymerize the polymerizable monomer, thereby obtaining a pressure-sensitive adhesive layer.

The process from the application of or impregnation with the pressure-sensitive adhesive composition to the irradiation with light is preferably carried out in an inert gas atmosphere or in a condition that oxygen is blocked by a film or the like.

In this production method, the pressure-sensitive adhesive composition obtained by mixing the components may be pre-polymerized before application to the release sheet, the support, or the like, in order to increase the viscosity.

(Pressure-sensitive rubber adhesive)

Next, the pressure-sensitive rubber adhesive used for the pressure-sensitive adhesive layer will be described.

The pressure-sensitive rubber adhesive contains a rubber component and a tackifier resin. As the rubber component, a styrene/isoprene block copolymer is preferably used. The styrene/isoprene block copolymer preferably has a diblock ratio of 25 to 70 mass%, more preferably 30 to 65 mass%, and further preferably 45 to 60 mass%. The diblock here refers to a diblock composed of styrene and isoprene. When the diblock ratio is within the above-described range, the adhesive force is easily enhanced. In addition to the diblock, the styrene/isoprene block copolymer also includes those having three or more blocks, such as a triblock composed of styrene, isoprene, and styrene blocks.

The amount of styrene in the styrene/isoprene block copolymer is not particularly limited, and preferably 14 to 24 mass%, and more preferably 15 to 18 mass%. When the amount of styrene is 14 mass% or more, the pressure-sensitive adhesive having a high cohesive is easily obtained. When the amount of styrene is 24 mass% or less, the pressure-sensitive adhesive has a cohesive force at an appropriate level to easily exhibit an adhesive force.

The molecular weight of the styrene/isoprene block copolymer is not particularly limited, and the weight-average molecular weight thereof is preferably 100,000 to 400,000, and more preferably 150,000 to 250,000. The weight-average molecular weight as used herein refers to that measured as a molecular weight in terms of polystyrene by the gel permeation chromatography (GPC) method.

Various tackifier resins can be used as the tackifier resin used for the pressure-sensitive rubber adhesive, and preferably, a petroleum-based resin, a terpene resin, or a kumaron resin is used. The tackifier resins can be used singly or in combinations of two or more thereof, and it is preferable to use a petroleum-based resin in combination with at least one selected from a terpene resin and a kumaron resin. Such combinations of the tackifier resins are likely to render the adhesive force great.

Examples of the petroleum-based resin include an aliphatic petroleum resin (C5 petroleum resin), an alicyclic petroleum resin, and an aromatic petroleum resin, and the aliphatic petroleum resin is preferable in terms of the compatibility with the styrene/isoprene block copolymer. It is preferable to use a petroleum-based resin having a softening point of about 90 to 120°C.

As the terpene resin, one having a softening point of about 80 to 120°C can be used, and one having a softening point less than 100°C is preferable in terms of securing the adhesive force. As the kumaron resin, one preferably having a softening point of 110 to 130°C, more preferably 115 to 125°C is used in order to secure the cohesive force.

The amount of the tackifier resin is preferably 60 to 250 parts by mass, more preferably 100 to 200 parts by mass, and further preferably 110 to 180 parts by mass, per 100 parts by mass of the rubber component. When the amount of the tackifier resin blended is within the above-described range, the cohesive force can be greater so that an appropriate adhesive force can be imparted.

When the petroleum-based resin is used in combination with at least one selected from the terpene resin and the kumaron resin, the amount of the petroleum-based resin is preferably 50 to 200 parts by mass, preferably 60 to 150 parts by mass, and more preferably 60 to 110 parts by mass, per 100 parts by mass of the rubber component. On the other hand, the amount of the terpene resin is preferably 10 to 70 parts by mass, more preferably 20 to 60 parts by mass, and further preferably 30 to 50 parts by mass, per 100 parts by mass of the rubber component. The amount of the kumaron resin is preferably 10 to 60 parts by mass, more preferably 15 to 50 parts by mass, and further preferably 20 to 40 parts by mass, per 100 parts by mass of the rubber component.

As in the pressure-sensitive acrylic adhesive, the pressure-sensitive rubber adhesive may contain the fine particle described hereinbefore, and the pressure-sensitive rubber adhesive may also contain a sacrificial protection metal, an electroconductive material, a softener, an antioxidant, a filler, and the like, as necessary.

(Pressure-sensitive urethane adhesive)

The pressure-sensitive urethane adhesive described above is not particularly limited, and examples thereof include a urethane resin obtained by reacting at least a polyol and a polyisocyanate compound. Examples of the polyol include a polyether polyol, a polyester polyol, a polycarbonate polyol, and a polycaprolactone polyol. Examples of the polyisocyanate compound include diphenylmethane diisocyanate, tolylene diisocyanate, and hexamethylene diisocyanate. These pressure-sensitive urethane adhesives may be used singly or in combinations of two or more thereof.

A urethane resin obtained by reacting a polyurethane polyol and a polyfunctional isocyanate-based curing agent may also be used as the pressure-sensitive urethane adhesive. Examples of the polyurethane polyol include a reaction product of the above-described polyol and polyisocyanate compound, and a reaction product of the polyol, the polyisocyanate compound, and a chain extender such as a diamine. The polyfunctional isocyanate-based curing agent may be a compound having two or more isocyanate groups, and the isocyanate compound described above may be used therefor.

The pressure-sensitive urethane adhesive may contain the fine particle described hereinbefore in addition to the urethane resin, and the pressure-sensitive urethane adhesive may also contain a tackifier resin, a sacrificial protection metal, an electroconductive material, a softener, an antioxidant, and a filler, and the others, if necessary.

(Pressure-sensitive silicone adhesive)

Examples of the pressure-sensitive silicone adhesive include pressure-sensitive silicone adhesives of addition reaction-type, peroxide curing-type, and condensation reaction-type. Among these, the pressure-sensitive silicone adhesive of addition reaction-type is preferably used in terms of curability at a low temperature for a short time. The pressure-sensitive silicone adhesive of addition reaction type is cured while the pressure-sensitive adhesive layer is formed. When the pressure-sensitive silicone adhesive of addition reaction type is used as the pressure-sensitive silicone adhesive, the pressure-sensitive silicone adhesive may include a catalyst such as a platinum catalyst.

The pressure-sensitive silicone adhesive may contain a fine particle, and a crosslinking agent and various additives for controlling the adhesive force may also be added thereto.

(Storage elastic modulus G')

The pressure-sensitive adhesive layer preferably has a storage modulus G' at 23°C of 50000 to 1000000 Pa. When the storage modulus G' at 23°C falls within the above range, in the case in which the pressure-sensitive adhesive layer is damaged by an external impact or the like, the force to restore the damaged portion (hereinafter, also referred to as a self-restoring force) increases. As a result, formation of rust is suppressed, and the anticorrosion performance is enhanced.

The storage modulus G' at 23°C of the pressure-sensitive adhesive layer is more preferably 200000 to 800000 Pa and further preferably 300000 to 600000 Pa, in terms of enhancing the self-restoring force and improving the anticorrosion performance.

The storage elastic modulus G' can be calculated by measuring a viscoelastic spectrum using DVA-200 (manufactured by IT Measurement Control Co., Ltd.), for example, under conditions: shear mode: 10 Hz, amount of distortion: 0.1%, temperature range: -100°C to 100°C, and temperature elevation rate: 10°C/min.

(Thickness)

The thickness of the pressure-sensitive adhesive layer is preferably 25 $\mu$m or more and more preferably 100 $\mu$m or more. When the thickness is 100 $\mu$m or more, the self-restoring force and the like increase, the anticorrosive property of the anticorrosive pressure-sensitive adhesive tape can be enhanced, and the adhesive force easily increases. From such a point of view, the thickness of the pressure-sensitive adhesive layer is more preferably 200 $\mu$m or more, further preferably 300 $\mu$m or more, and further preferably 500 $\mu$m or more. The upper limit of the thickness of the pressure-sensitive adhesive layer is not particularly limited. In terms of achieving an effect of enhancing the anticorrosion performance in accordance with the thickness, the thickness of the pressure-sensitive adhesive layer is, for example, 3000 $\mu$m or less, preferably 2000 $\mu$m or less, and more preferably 1500 $\mu$m or less.

[Structure of anticorrosive pressure-sensitive adhesive tape]

The anticorrosive pressure-sensitive adhesive tape of the present invention may be a pressure-sensitive adhesive double-sided tape or may be a pressure-sensitive adhesive single coated tape. The layer structure of the anticorrosive pressure-sensitive adhesive tape of the present invention will be described below with reference to drawings.

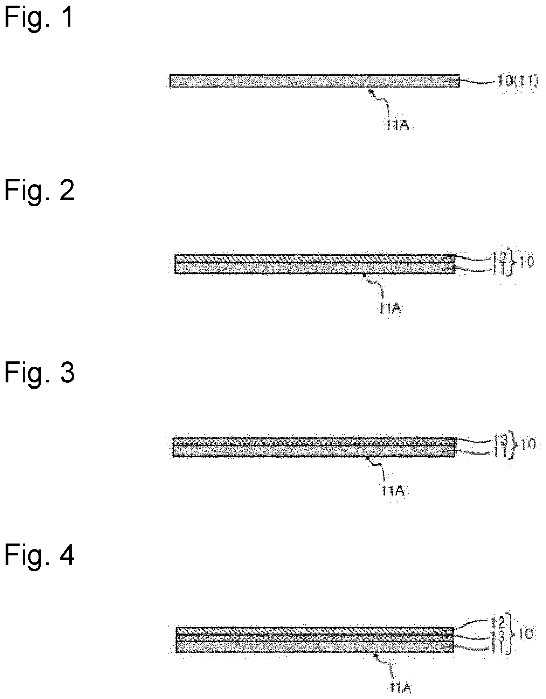

As shown in Fig. 1, an anticorrosive pressure-sensitive adhesive tape 10 is preferably a pressure-sensitive adhesive double-sided tape consisting only of a pressure-sensitive adhesive layer 11 (in other words, a pressure-sensitive adhesive layer alone), which is called a base material-less double-sided tape. Use of the anticorrosive pressure-sensitive adhesive tape 10 consisting only of the pressure-sensitive adhesive layer 11 enables the thickness of the tape to be thinner while maintaining the anticorrosive property favorable.

The anticorrosive pressure-sensitive adhesive tape in each drawing is adhered to an adherend for use, with the surface 11A of the pressure-sensitive adhesive layer 11 serving as the adhesive surface.

As shown in Fig. 2, the anticorrosive pressure-sensitive adhesive tape 10 may be a pressure-sensitive adhesive single coated tape including a base material 12 and the pressure-sensitive adhesive layer 11 provided on one side of the base material 12. Thereby the pressure-sensitive adhesive layer 11 can be protected by the base material 12.

In addition, the anticorrosive pressure-sensitive adhesive tape may be a pressure-sensitive adhesive double-sided tape including a base material and a pressure-sensitive adhesive layer provided on each side of the base material, not shown. In this case, each pressure-sensitive adhesive layer is as described above.

As described above, the pressure-sensitive adhesive layer in the present invention may not contain a metal having a lower potential than that of iron. In this case, in order to enhance the anticorrosive property of the anticorrosive pressure-sensitive adhesive tape 10, preferably, the anticorrosive pressure-sensitive adhesive tape 10 comprises the pressure-sensitive adhesive layer 11 and a metal layer 13 provided on one side of the pressure-sensitive adhesive layer 11, as shown in Fig. 3, and the metal layer 13 is a layer of a metal having a lower potential than that of iron. As the metal having a lower potential than that of iron, those mentioned above are used without particular limitation. The metal layer 13 is more preferably a layer of zinc. The metal layer 13 specifically may be formed by adhering a metal foil made of a metal having a lower potential than that of iron to the surface of the pressure-sensitive adhesive layer 11. The metal layer 13 also may be a metal film formed by coating a metal on the surface of the pressure-sensitive adhesive layer 11 by sputtering, vacuum deposition, or the like.

The metal layer 13 is formed directly on the pressure-sensitive adhesive layer 11. In other words, the metal having a lower potential than that of iron constituting the metal layer 13 comes in contact with the pressure-sensitive adhesive layer 11. Once the metal having a lower potential than that of iron comes in contact with the pressure-sensitive adhesive layer 11 as described above, electrons to be emitted in ionization can easily migrate to the pressure-sensitive adhesive layer 11, and thus the anticorrosive property of the anticorrosive pressure-sensitive adhesive tape 10 is improved. Also in this case, in terms of the anticorrosive property of the anticorrosive pressure-sensitive adhesive tape 10, the pressure-sensitive adhesive layer 11 preferably contains an electroconductive material other than the metal having a lower potential than that of iron.

The thickness of the metal layer 13 is preferably 2.5 $\mu$m or more. When the thickness of the metal layer 13 is 2.5 $\mu$m or more, the metal layer 13 can sufficiently supply electrons from the ionization of the metal in the metal layer 13, enabling a sufficient anticorrosive property of the anticorrosive pressure-sensitive adhesive tape 10 to be maintained. In terms of enhancing the anticorrosive property of the anticorrosive pressure-sensitive adhesive tape 10, the thickness of the metal layer 13 is more preferably 5 $\mu$m or more. In terms of achieving the flexibility of the anticorrosive pressure-sensitive adhesive tape 10 to make the handleability of the anticorrosive pressure-sensitive adhesive tape 10 favorable, the thickness of the metal layer 13 is preferably 200 $\mu$m or less and more preferably 100 $\mu$m or less.

Further, as shown in Fig. 4, the anticorrosive pressure-sensitive adhesive tape 10 may further comprise the base material 12 and the metal layer 13 provided on one side of the base material 12, the pressure-sensitive adhesive layer 11 may be provided on one side of the metal layer 13, and the metal layer 13 may be a layer of a metal having a lower potential than that of iron. As the base material 12 protects the metal layer 13, the anticorrosive property of the anticorrosive pressure-sensitive adhesive tape 10 can be further improved. Also in this case, in terms of the anticorrosive property of the anticorrosive pressure-sensitive adhesive tape 10, the pressure-sensitive adhesive layer 11 preferably contains an electroconductive material other than the metal having a lower potential than that of iron. At this time, the metal layer 13 may be adhered to the base material 12 with an adhesive or the like or may be formed on the base material 12 by sputtering, vacuum deposition, or the like.

Also when the anticorrosive pressure-sensitive adhesive tape comprises a metal layer which is a layer of a metal having a lower potential than that of iron, the pressure-sensitive adhesive layer may contain a metal having a lower potential than that of iron. Thereby, the anticorrosive property of the anticorrosive pressure-sensitive adhesive tape can be further improved with both the metal having a lower potential than that of iron of the metal layer and the metal having a lower potential than that of iron in the pressure-sensitive adhesive layer.

The anticorrosive pressure-sensitive adhesive tape of the present invention may include a release sheet attached on the surface of the pressure-sensitive adhesive layer. The release sheet may be peeled off from the pressure-sensitive adhesive layer before use of the anticorrosive pressure-sensitive adhesive tape to expose the pressure-sensitive adhesive layer and then the adhesive tape may be attached to an adherend with the exposed pressure-sensitive adhesive layer. For example, in a pressure-sensitive adhesive double-sided tape, the release sheet may be attached to both the sides of the tape, or the release sheet may be attached to only one side of the tape. In a pressure-sensitive adhesive single coated tape, the release sheet may be attached to one side of the pressure-sensitive adhesive layer to be exposed.

A resin film may be used as the release sheet, and the side to be attached to the pressure-sensitive adhesive layer is preferably a release-treated side, which has been release-treated with a silicone release agent or the like.

The anticorrosive pressure-sensitive adhesive tape of the present invention is attached to various adherends when in use, and the type of the adherends is not particularly limited. The anticorrosive pressure-sensitive adhesive tape of the present invention is preferably adhered to the surface of an adherend made of any of various metal materials when in use because of being excellent in an adhesive force and an anticorrosive property. The metal material is preferably that containing at least one selected from the group consisting of iron and an alloy including iron. Specific examples of the alloy including iron include various steel materials, including alloy steels such as nickel chromium steel, nickel chrome molybdenum steel, chrome steel, chrome molybdenum steel, and manganese steel, and carbon steel.

[Anticorrosive pressure-sensitive adhesive tape (second invention)]

The anticorrosive pressure-sensitive adhesive tape according to the second invention will be described below.

The anticorrosive pressure-sensitive adhesive tape according to the second invention of the present invention is an anticorrosive pressure-sensitive adhesive tape comprising a base material and a pressure-sensitive adhesive layer provided on one side of the base material, the base material having a gloss retention of 80% or more after an accelerated weather resistance test in accordance with Cycle A in JIS K5600-7-7 is conducted for 500 hours. Further, the anticorrosive pressure-sensitive adhesive tape according to the second invention has an adhesive force of 20 N/25 mm or more after a cyclic corrosion test in accordance with Cycle D in JIS K5600-7-9.

In the anticorrosive pressure-sensitive adhesive tape according to the second invention of the present invention, the base material has a gloss retention of 80% or more after an accelerated weather resistance test in accordance with Cycle A in JIS K5600-7-7 is conducted for 500 hours. When the gloss retention is less than 80%, in the case where the anticorrosive pressure-sensitive adhesive tape is exposed to light irradiation over a long period, deterioration of the base material itself proceeds to worsen the appearance of the anticorrosive pressure-sensitive adhesive tape. Moreover, the base material insufficiently blocks light such as sunlight (particularly ultraviolet rays), whereby the pressure-sensitive adhesive layer also deteriorates, and the adhesive force of the anticorrosive pressure-sensitive adhesive tape decreases. Accordingly, unless a coating material having weather resistance is applied over the tape or the like, it is difficult to suppress a decrease in the adhesive force.

Considering this respect, the gloss retention of the base material constituting the anticorrosive pressure-sensitive adhesive tape of the present invention is preferably 85% or more and more preferably 90% or more. The gloss retention is preferably as high as possible, and its upper limit is 100%.

The gloss retention of the anticorrosive pressure-sensitive adhesive tape after the accelerated weather resistance test can be measured by a method similar to the method described above in the anticorrosive pressure-sensitive adhesive tape according to the first invention.

The anticorrosive pressure-sensitive adhesive tape according to the second invention has an adhesive force after the cyclic corrosion test of 20 N/25 mm or more. When the adhesive force is less than 20 N/25 mm, the long-term adhesive force will be insufficient, the anticorrosive pressure-sensitive adhesive tape is more likely to be separated from an adherend such as steel material, and thus the anticorrosive property is degraded.

In terms of improving the adhesive force to improve the anticorrosive property, the adhesive force after the cyclic corrosion test is preferably 25 N/25 mm or more, more preferably 30 N/25 mm or more, and further preferably 40 N/25 mm or more. The adhesive force is preferably as high as possible and is practically 200 N/25 mm or less.

The method for measuring the adhesive force after the cyclic corrosion test is as described in the anticorrosive pressure-sensitive adhesive tape according to the first invention described above, and thus the description here is omitted.

The anticorrosive pressure-sensitive adhesive tape according to the second invention preferably prevents generation of rust in the cyclic corrosion test, in terms of improving the long-term anticorrosive property, as described in the anticorrosive pressure-sensitive adhesive tape according to the first invention. With respect to "Presence or absence of rust in cyclic corrosion test", the description in the anticorrosive pressure-sensitive adhesive tape according to the first invention also can apply to the anticorrosive pressure-sensitive adhesive tape according to the second invention, and thus the description here is omitted.

The anticorrosive pressure-sensitive adhesive tape according to the second invention also preferably satisfies the requirements for "Difference between tensile loads", "Tensile elongation at break", and "Elmendorf tear strength" described in the anticorrosive pressure-sensitive adhesive tape according to the first invention, in terms of conforming to the shape of an adherend having a complex shape to thereby exert an excellent anticorrosive property. With respect to "Difference between tensile loads", "Tensile elongation at break", and " Elmendorf tear strength", the description in the anticorrosive pressure-sensitive adhesive tape according to the first invention also can apply to the anticorrosive pressure-sensitive adhesive tape according to the second invention, and thus the description here is omitted.

<Base material>

As the base material in the anticorrosive pressure-sensitive adhesive tape according to the second invention, the base material described in the anticorrosive pressure-sensitive adhesive tape according to the first invention can be used without particular limitation. With respect to "Materials to be used in base material" and "Thickness of base material", the description in the anticorrosive pressure-sensitive adhesive tape according to the first invention also can apply to the anticorrosive pressure-sensitive adhesive tape according to the second invention, and thus the description here is omitted.

<Pressure-sensitive adhesive layer >

The anticorrosive pressure-sensitive adhesive tape according to the second invention comprises a pressure-sensitive adhesive layer on at least one side of the base material. The pressure-sensitive adhesive layer is similar to the pressure-sensitive adhesive layer in the anticorrosive pressure-sensitive adhesive tape according to the first invention, and thus the description is omitted.

<Structure of anticorrosive pressure-sensitive adhesive tape>

The anticorrosive pressure-sensitive adhesive tape 10 according to the second invention is preferably a pressure-sensitive adhesive single coated tape comprising a base material 12 and a pressure-sensitive adhesive layer 11 provided on one side of the base material 12, as shown in Fig. 2. Thereby the pressure-sensitive adhesive layer 11 can be protected by the base material 12.

The anticorrosive pressure-sensitive adhesive tape in each drawing is adhered to an adherend for use, with the surface 11A of the pressure-sensitive adhesive layer 11 serving as the adhesive surface.

The anticorrosive pressure-sensitive adhesive tape may be a pressure-sensitive adhesive double-sided tape including a base material and a pressure-sensitive adhesive layer provided on each side of the base material, not shown.

As described above, the pressure-sensitive adhesive layer in the present invention may not contain a metal having a lower potential than that of iron. In this case, in order to enhance the anticorrosive property of the anticorrosive pressure-sensitive adhesive tape 10, preferably, the anticorrosive pressure-sensitive adhesive tape 10 further comprises a metal layer 13 between the base material 12 and the pressure-sensitive adhesive layer 11, and the metal layer 13 is a layer of a metal having a lower potential than that of iron, as shown in Fig. 4. As the metal having a lower potential than that of iron, those mentioned above are used without particular limitation. The metal layer 13 is more preferably a layer of zinc. The metal layer 13 specifically may be adhered to the base material 12 with an adhesive or the like or may be formed on the base material 12 by sputtering, vacuum deposition, or the like. The metal layer 13 also may be a metal film formed by coating a metal on the surface of the pressure-sensitive adhesive layer 11 by sputtering, vacuum deposition, or the like.

The metal layer 13 is formed directly on the pressure-sensitive adhesive layer 11 in a form so as to be interposed between the base material 12 and the pressure-sensitive adhesive layer 11. In other words, the metal having a lower potential than that of iron constituting the metal layer 13 comes in contact with the pressure-sensitive adhesive layer 11. Once the metal having a lower potential than that of iron comes in contact with the pressure-sensitive adhesive layer 11 in this manner, electrons to be emitted in ionization can easily migrate to the pressure-sensitive adhesive layer 11, and thus the anticorrosive property of the anticorrosive pressure-sensitive adhesive tape 10 is enhanced. Also in this case, in terms of the anticorrosive property of the anticorrosive pressure-sensitive adhesive tape 10, the pressure-sensitive adhesive layer 11 preferably contains an electroconductive material other than the metal having a lower potential than that of iron.

The thickness of the metal layer 13 is preferably 2.5 $\mu$m or more. When the thickness of the metal layer 13 is 2.5 $\mu$m or more, the metal layer 13 can sufficiently supply electrons from the ionization of the metal in the metal layer 13, enabling a sufficient anticorrosive property of the anticorrosive pressure-sensitive adhesive tape 10 to be maintained. In terms of enhancing the anticorrosive property of the anticorrosive pressure-sensitive adhesive tape 10, the thickness of the metal layer 13 is more preferably 5 $\mu$m or more. In terms of achieving the flexibility of the anticorrosive pressure-sensitive adhesive tape 10 to make the handleability and the like of the anticorrosive pressure-sensitive adhesive tape 10 favorable, the thickness of the metal layer 13 is preferably 200 $\mu$m or less and more preferably 100 $\mu$m or less.

The anticorrosive pressure-sensitive adhesive tape according to the second invention may include a release sheet attached on the surface of the pressure-sensitive adhesive layer. The release sheet may be peeled off from the pressure-sensitive adhesive layer before use of the anticorrosive pressure-sensitive adhesive tape to expose the pressure-sensitive adhesive layer and then may be attached on an adherend with the exposed pressure-sensitive adhesive layer. More specifically, of the sides of the pressure-sensitive adhesive layer, the release sheet may be attached to the side opposite to the side on which the base material or the metal layer 13 is provided, that is, the surface 11A.

A resin film may be used as the release sheet, and the side to be attached to the pressure-sensitive adhesive layer is preferably a release-treated side, which has been release-treated with a silicone release agent or the like.

The anticorrosive pressure-sensitive adhesive tape according to the second invention is attached to various adherends when in use, the type of the adherends is not particularly limited. The anticorrosive pressure-sensitive adhesive tape of the present invention is preferably adhered to the surface of an adherend made of any of various metal materials when in use because of being excellent in an adhesive force and an anticorrosive property. The metal material is preferably that containing at least one selected from the group consisting of iron and an alloy including iron. Specific examples of the alloy including iron include various steel materials, including alloy steels such as nickel chromium steel, nickel chrome molybdenum steel, chrome steel, chrome molybdenum steel, and manganese steel, and carbon steel.

[Anticorrosive pressure-sensitive adhesive tape (third invention)]

The anticorrosive pressure-sensitive adhesive tape according to the third invention will be described below.

The anticorrosive pressure-sensitive adhesive tape according to the third invention of the present invention comprises a base material and a pressure-sensitive adhesive layer provided on at least one side of the base material. In the anticorrosive pressure-sensitive adhesive tape, the base material has a difference between the tensile load at 2.5% elongation and the tensile load at 0.5% elongation of 30 N/24 mm or less, and a tensile elongation at break of 100% or more.

The base material of the anticorrosive pressure-sensitive adhesive tape according to the third invention has a difference between the tensile load at 2.5% elongation and the tensile load at 0.5% elongation (the difference between tensile loads) of 30 N/24 mm or less. The difference between tensile loads means the tensile load per 2% elongation substantially in the elastic region. When the value of the difference between tensile loads is small, the tape conforms to an adherend and is more easily attached thereto. Additionally, even when the tape is stretched and attached to an adherend, a stress due to shrinkage or the like is unlikely to occur after the attachment, and thus the adhesiveness after the attachment increases.

When the difference between tensile loads exceeds 30 N/24 mm, in the case in which the anticorrosive pressure-sensitive adhesive tape is closely attached to an adherend having a complex shape such as a welded portion after welding of piping, occurrence of shrinkage in the anticorrosive pressure-sensitive adhesive tape may lead to insufficient close attachment of the anticorrosive pressure-sensitive adhesive tape. The tape becomes difficult to attach in conformance to an adherend having a complex shape. Considering this respect, the difference between tensile loads is preferably 27 N/24 mm or less and more preferably 25 N/24 mm or less. The lower limit of the difference between tensile loads is not particularly limited, and is preferably 1 N/24 mm or more and more preferably 3 N/24 mm or more in terms of imparting a certain mechanical strength.

The difference between tensile loads is to be measured each in the MD and the TD of the base material, and the larger of the values is to be employed. When it is not known whether the direction is the MD or the TD, the largest value of the differences between tensile loads may be employed. The difference between tensile loads can be measured by the method described in the example.

The base material for use in the anticorrosive pressure-sensitive adhesive tape of the present invention has a tensile elongation at break of 100% or more. When the tensile elongation at break of the base material is less than 100%, in an attempt of depositing the anticorrosive pressure-sensitive adhesive tape to a surface having a complex shape, occurrence of a tear in the anticorrosive pressure-sensitive adhesive tape or the like may lead to insufficient close attachment of the anticorrosive pressure-sensitive adhesive tape to the adherend. Considering this respect, the tensile elongation at break of the base material is preferably 200% or more and more preferably 300% or more.

On the other hand, the upper limit of the tensile elongation at break of the base material is not particularly limited and is preferably 1500% or less and more preferably 1000% or less in terms of mechanical strength and the like.

The tensile elongation at break is to be measured each in the MD and the TD of the base material, and the smaller of these is to be employed. When it is not known whether the direction is the MD or the TD, the smallest tensile elongation at break value may be employed. The tensile elongation at break can be measured by the method described in the example.

The difference between tensile loads and the tensile elongation at break of the base material can be adjusted to fall within the above-described ranges by appropriately selecting the materials to be used in the base material, the thickness of the base material, and the like.

The anticorrosive pressure-sensitive adhesive tape according to the third invention also preferably satisfies the requirement for "Elmendorf tear strength" described in the anticorrosive pressure-sensitive adhesive tape according to the first invention, in terms of conforming to the shape of an adherend having a complex shape to thereby exert an excellent anticorrosive property. With respect to "Elmendorf tear strength", the description in the anticorrosive pressure-sensitive adhesive tape according to the first invention also can apply to the anticorrosive pressure-sensitive adhesive tape according to the third invention, and thus the description here is omitted.

The anticorrosive pressure-sensitive adhesive tape according to the third invention preferably prevents generation of rust in the cyclic corrosion test, in terms of improving the long-term anticorrosive property, as described in the anticorrosive pressure-sensitive adhesive tape according to the first invention. With respect to "Presence or absence of rust in cyclic corrosion test" and "Adhesive force after the cyclic corrosion test", the description in the anticorrosive pressure-sensitive adhesive tape according to the first invention also can apply to the anticorrosive pressure-sensitive adhesive tape according to the third invention, and thus the description here is omitted.

In the anticorrosive pressure-sensitive adhesive tape according to the third invention, the base material preferably has a gloss retention of 80% or more after an accelerated weather resistance test in accordance with Cycle A in JIS K5600-7-7 is conducted for 500 hours in terms of improvement in the weather resistance. With respect to "Gloss retention after accelerated weather resistance test", the description in the anticorrosive pressure-sensitive adhesive tape according to the first invention also can apply to the anticorrosive pressure-sensitive adhesive tape according to the third invention, and thus the description here is omitted.

<Base material>

As the base material in the anticorrosive pressure-sensitive adhesive tape according to the third invention, the base material described in the anticorrosive pressure-sensitive adhesive tape according to the first invention can be used without particular limitation. With respect to "Materials to be used in base material" and "Thickness of base material", the description in the anticorrosive pressure-sensitive adhesive tape according to the first invention also can apply to the anticorrosive pressure-sensitive adhesive tape according to the third invention, and thus the description here is omitted.

<Pressure-sensitive adhesive layer >

The anticorrosive pressure-sensitive adhesive tape according to the third invention comprises a pressure-sensitive adhesive layer on at least one side of the base material. The pressure-sensitive adhesive layer is similar to the pressure-sensitive adhesive layer in the anticorrosive pressure-sensitive adhesive tape according to the first invention, and thus the description is omitted.

<Structure of anticorrosive pressure-sensitive adhesive tape>

The anticorrosive pressure-sensitive adhesive tape 10 according to the third invention is preferably a pressure-sensitive adhesive single coated tape comprising a base material 12 and a pressure-sensitive adhesive layer 11 provided on one side of the base material 12, as shown in Fig. 2. Thereby the pressure-sensitive adhesive layer 11 can be protected by the base material 12.

The anticorrosive pressure-sensitive adhesive tape in each drawing is adhered to an adherend for use, with the surface 11A of the pressure-sensitive adhesive layer 11 serving as the adhesive surface.

The anticorrosive pressure-sensitive adhesive tape may be a pressure-sensitive adhesive double-sided tape including a base material and a pressure-sensitive adhesive layer provided on each side of the base material, not shown.

As described above, the pressure-sensitive adhesive layer in the present invention may not contain a metal having a lower potential than that of iron. In this case, in order to enhance the anticorrosive property of the anticorrosive pressure-sensitive adhesive tape 10, preferably, the anticorrosive pressure-sensitive adhesive tape 10 further comprises a metal layer 13 between the base material 12 and the pressure-sensitive adhesive layer 11, and the metal layer 13 is a layer of a metal having a lower potential than that of iron, as shown in Fig. 4. As the metal having a lower potential than that of iron, those mentioned above are used without particular limitation. The metal layer 13 is more preferably a layer of zinc. The metal layer 13 specifically may be adhered to the base material 12 with an adhesive or the like or may be formed on the base material 12 by sputtering, vacuum deposition, or the like. The metal layer 13 also may be a metal film formed by coating a metal on the surface of the pressure-sensitive adhesive layer 11 by sputtering, vacuum deposition, or the like.

The metal layer 13 is formed directly on the pressure-sensitive adhesive layer 11 in a form so as to be interposed between the base material 12 and the pressure-sensitive adhesive layer 11. In other words, the metal having a lower potential than that of iron constituting the metal layer 13 comes in contact with the pressure-sensitive adhesive layer 11. Once the metal having a lower potential than that of iron comes in contact with the pressure-sensitive adhesive layer 11 in this manner, electrons to be emitted in ionization can easily migrate to the pressure-sensitive adhesive layer 11, and thus the anticorrosive property of the anticorrosive pressure-sensitive adhesive tape 10 is improved. Also in this case, in terms of the anticorrosive property of the anticorrosive pressure-sensitive adhesive tape 10, the pressure-sensitive adhesive layer 11 preferably contains an electroconductive material other than the metal having a lower potential than that of iron.

The thickness of the metal layer 13 is preferably 2.5 $\mu$m or more. When the thickness of the metal layer 13 is 2.5 $\mu$m or more, the metal layer 13 can sufficiently supply electrons from the ionization of the metal in the metal layer 13, enabling a sufficient anticorrosive property of the anticorrosive pressure-sensitive adhesive tape 10 to be maintained. In terms of enhancing the anticorrosive property of the anticorrosive pressure-sensitive adhesive tape 10, the thickness of the metal layer 13 is more preferably 5 $\mu$m or more. In terms of achieving the flexibility of the anticorrosive pressure-sensitive adhesive tape 10 to make the handleability and the like of the anticorrosive pressure-sensitive adhesive tape 10 favorable and in terms of easily closely attaching anticorrosive pressure-sensitive adhesive tape to an adherend having a complex shape, the thickness of the metal layer 13 is preferably 200 $\mu$m or less and more preferably 100 $\mu$m or less.

The anticorrosive pressure-sensitive adhesive tape of the third invention may include a release sheet attached on the surface of the pressure-sensitive adhesive layer. The release sheet may be peeled off from the pressure-sensitive adhesive layer before use of the anticorrosive pressure-sensitive adhesive tape to expose the pressure-sensitive adhesive layer and then may be attached on an adherend with the exposed pressure-sensitive adhesive layer. More specifically, of the sides of the pressure-sensitive adhesive layer, the release sheet may be attached to the side opposite to the side on which the base material 12 or the metal layer 13 is provided, that is, the surface 11A.

A resin film may be used as the release sheet, and the side to be attached to the pressure-sensitive adhesive layer is preferably a release-treated side, which has been release-treated with a silicone release agent or the like.

[Applications of anticorrosive pressure-sensitive adhesive tape]

The anticorrosive pressure-sensitive adhesive tape according to the third invention is attached to various adherends and used to prevent corrosion of the adherends. The anticorrosive pressure-sensitive adhesive tape of one embodiment of the present invention is preferably adhered to the surface of an adherend made of any of various metal materials when in use because of being excellent in an adhesive force and an anticorrosive property. The metal material is preferably that containing at least one selected from the group consisting of iron and an alloy including iron. Specific examples of the alloy including iron include various steel materials, including alloy steels such as nickel chromium steel, nickel chrome molybdenum steel, chrome steel, chrome molybdenum steel, and manganese steel, and carbon steel.

The anticorrosive pressure-sensitive adhesive tape according to the third invention is preferably used on an adherend having a complex shape. Specific examples of the adherend include an adherend having projections and depressions, such as a member having a welded portion, which member is provided by joining two members by welding. In a member having a welded portion, the welded portion corresponds to a projected portion. Examples of the adherend having a welded portion include welded piping. In welded piping, a seam at which two pipes are connected corresponds to the welded portion. The anticorrosive pressure-sensitive adhesive tape may be adhered to an adherend having a welded portion so as to cover the welded portion.

Generally, even when a welded portion is applied with an anti-corrosive coating, the coating runs down until curing. Then the film thickness of the coating after being cured becomes thinner than required, cracking is formed, a cracked face is exposed, and thus the welded portion relatively easily rusts. Attachment of the anticorrosive pressure-sensitive adhesive tape of the present invention thereto can appropriately prevent rust at the welded portion. The anticorrosive pressure-sensitive adhesive tape of the present invention, even when adhered to an adherend having a complex shape such as a welded portion, can achieve high adhesiveness and conformability without tearing and thus can exert an excellent anticorrosive property.

The anticorrosive pressure-sensitive adhesive tape according to the third invention may be adhered to an adherend and then attached by pressure to the adherend under heating at 90 to 150°C, for example, and preferably at 90 to 130°C. Attaching the tape to an adherend under heating enables the tape to be adhered to the adherend with higher adhesiveness and conformability, easily achieving a high anticorrosive property. The pressure-sensitive adhesive tape may be heated with a known heating device such as an industrial dryer.

The anticorrosive pressure-sensitive adhesive tape of the present invention may be used for repair. Repair refers to anticorrosion-treating a metal material such as a steel material composing an existing structure, for example, a bridge, a steel tower, an elevated bridge, a tank, a plant, a pier, or piping.

Examples

The present invention will now be described in more detail by way of examples, but the present invention is not limited to these examples.

[Evaluation method]

The anticorrosive pressure-sensitive adhesive tape was evaluated by the following evaluation methods in Examples and Comparative Examples.

<Presence or absence of formation of rust in cyclic corrosion test>

As described in the description, presence or absence of formation of rust in a cut scratch portion was visually checked in JIS K5600-7-9 (Testing methods for paints - Part 7: Long-period performance of film - Section 9: Determination of resistance to cyclic corrosion conditions - Salt Fog/dry/humidity, Cycle D).

(Adhesive force)

1. Preparation of specimen

The anticorrosive pressure-sensitive adhesive tape of each of Examples and Comparative Examples (25 mm in width and 100 mm in length) was attached to an SUS plate (50 mm in width and 125 mm in length) to prepare a specimen for adhesive force evaluation. The specimen for adhesive force evaluation was used to measure the initial adhesive force (adhesive force before the test).

Additionally, a specimen for adhesive force evaluation separately prepared in the same manner was subjected to a salt water spraying test based on Cycle D in Appendix I of JIS K5600-7-9. The test was performed in 28 cycles (168 hours in total). Then, the specimen for adhesive force evaluation after the salt water spraying test was measured for the adhesive force.

2. Measurement of adhesive force

The adhesive force was measured as follows using the specimens for adhesive force evaluation both before and after the test.

Each of the specimens for adhesive force evaluation was fixed to the chucks of a tensile tester ("TENSILON Universal Material Testing Instrument, manufactured by A&D Company, Limited). Thereafter, the anticorrosive pressure-sensitive adhesive tape was pulled over 60 mm or more at a peeling angle of 180° and a rate of 300 mm/min under an environment of 23°C and 50 RH%, and an average value of loads (N) detected over that interval by the load cell was recorded, which was used as the adhesive force.

(Storage elastic modulus)

The storage modulus at 23°C of the pressure-sensitive adhesive layer of the anticorrosive pressure-sensitive adhesive tape was calculated by measuring a viscoelastic spectrum using a dynamic viscoelasticity measuring apparatus (product name "DVA-200" manufactured by IT Measurement Control Co., Ltd.) under conditions: shear mode: 10 Hz, amount of distortion: 0.1%, temperature range: -100°C to 100°C, and temperature elevation rate: 10°C/min.

<Difference between tensile loads>

The base material used in each of Examples and Comparative Examples was measured for each of the tensile load at 2.5% pulling and the tensile load at 0.5% pulling using a tensile tester, and the difference between both the tensile loads was calculated. Each of the measurements was conducted both in the MD and TD, and the difference between the tensile load at 2.5% pulling and the tensile load at 0.5% pulling was calculated for each direction. Of the differences between the tensile loads in the MD and the TD, the larger value was used as the difference between tensile loads.

<Tensile elongation at break>

The base material used for preparation of the anticorrosive pressure-sensitive adhesive tape of each of Examples and Comparative Examples was subjected to a tensile test in both directions of the MD and the TD using a tensile tester ("TENSILON Universal Material Testing Instrument, manufactured by A&D Company, Limited), and the tensile elongation at break was calculated by the following expression.

$$\text{Tensile elongation at break (\%)} = (L - L_0)/L_0 \times 100$$

Wherein L is the length of the specimen at break, and $L_0$ is the length of the specimen before the tensile test.

Of the calculated tensile elongations at break in the MD and the TD, the smaller value was used as the tensile elongation at break of the film.

The conditions in measuring the tensile load and measuring the tensile elongation at break were as follows.

Dimensions and shape of the base material: strip shape of 10 mm in width × 80 mm in length
Distance between chucks: 50 mm
Tensile rate: 300 mm/min

<Elmendorf tear strength>

The Elmendorf tear strength was measured by an Elmendorf tear method in accordance with JIS K7128-2 (1998). The measurement was conducted in both the MD and the TD, and the smaller value was used as the Elmendorf tear strength (N) of the base material.

<Practical evaluation on separation>

The anticorrosive pressure-sensitive adhesive tape of each of Examples and Comparative Examples (25 mm in width and 100 mm in length) was attached to an SUS plate (50 mm in width and 125 mm in length) and aged at 23°C for three days to prepare a specimen for separation evaluation. Water was injected for five minutes under conditions of water pressure of 8 MPa, from an injection position diagonally upward of the anticorrosive pressure-sensitive adhesive tape in the specimen for separation evaluation toward the side of a longitudinal end of the anticorrosive pressure-sensitive adhesive tape. As the position from which water was injected (injection position), used was a position at which the line connecting the injection position and the center of the anticorrosive pressure-sensitive adhesive tape end made an angle of 30° with the SUS plate, the position being immediately above a point 5 cm distant in the horizontal direction from the center of the anticorrosive pressure-sensitive adhesive tape end.

The distance separated of the anticorrosive pressure-sensitive adhesive tape after water injection was measured and evaluated in accordance with the following criteria.

A: The distance separated is 0 mm or more and less than 15 mm.
B: The distance separated is 15 mm or more and less than 25 mm.
C: The distance separated is 25 mm or more.

<Weather resistance (gloss retention)>

The anticorrosive pressure-sensitive adhesive tape of each of Examples and Comparative Examples (25 mm in width and 100 mm in length) was attached, and the specular glossiness is measured with respect to the surface of the tape from the base material side with a gloss meter (product name: "IG-340" manufactured by HORIBA, Ltd.). The specular glossiness was measured using a gloss meter of a geometric condition of 60° in accordance with JIS K5600-4-7. The specular glossiness obtained by the measurement at this time was used as a specular glossiness A. Thereafter, the tape was subjected to an accelerated weather resistance test in accordance with Cycle A in JIS K5600-7-7 for 500 hours. After the accelerated weather resistance test was performed, the specular glossiness of the base material of the tape was measured by the same method as performed before the test. The specular glossiness obtained in the measurement after the test is used as a specular glossiness B.

From the two specular glossinesses obtained as above, the gloss retention of the base material of the tape was calculated. The expression for determining the gloss retention is as follows.

$$\text{Gloss retention (\%)} = (\text{specular glossiness B/specular glossiness A}) \times 100$$

A: The gloss retention is 90% or more.
B: The gloss retention is 80% or more and less than 90%.
C: The gloss retention is less than 80%.

<Practical evaluation on projection conformability>

The projection conformability was evaluated by a procedure shown in 1 to 4 below.

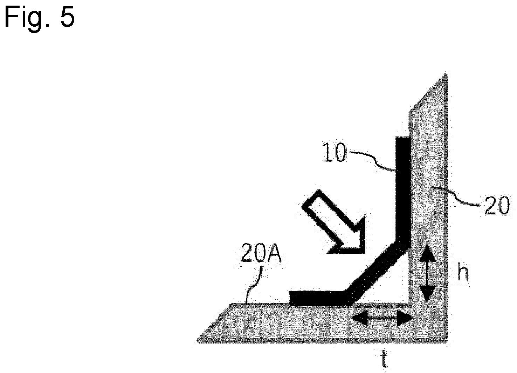

1. As shown in Fig. 5, an anticorrosive pressure-sensitive adhesive tape 10 was attached to a face to be an adhered 20A of an L-shaped SUS plate 20 such that the height h and the width t from the corner each were 2 mm.
2. A squeegee was pressed onto a portion in the anticorrosive pressure-sensitive adhesive tape 10 not adhered to the L-shaped SUS plate 20.
3. After the pressing in 2 above, the height h was measured, and additionally, the presence or absence of occurrence of a tear in the anticorrosive pressure-sensitive adhesive tape 10 was visually checked. When a tear occurred during the pressing in the anticorrosive pressure-sensitive adhesive tape 10, the height h was measured as 2 mm.
4. Based on the measurement of the height h obtained in 3 above, the projection conformability of the anticorrosive pressure-sensitive adhesive tape 10 was evaluated in accordance with the following criteria.

A: The height h was 0 mm, and no tear occurred in the anticorrosive pressure-sensitive adhesive tape 10.
C: The height h was larger than 0 mm, or a tear occurred in the anticorrosive pressure-sensitive adhesive tape 10.

<Total evaluation>

Based on the three evaluations described above: "Separation", "Weather resistance", and "Projection conformability", the total evaluation was conducted as follows.

S: All the three evaluations are rated "B" or higher.

A: The evaluation of "Separation" is rated "B" or higher, and one of the other evaluations is rated "C".
B: The evaluation of "Separation" is rated "B" or higher, and the other two evaluations are rated "C".
C: The evaluation of "Separation" is rated "C".

<Base material used>

As the base material, the following resin films were used.

Polyolefinic resin film: product name "Bejitaron NEXT-S", manufactured by SUMIKASEKISUI FILM CO., LTD.
Polyolefinic resin film: product name "Pureron CP-WGF", manufactured by SUMIKASEKISUI FILM CO., LTD.
Polyolefinic resin film: product name "Estron", manufactured by SUMIKASEKISUI FILM CO., LTD.
Single-layer film of low density polyethylene (LDPE): product name "SEKISUI PE sheet", manufactured by SEKISUI SEIKEI CO., LTD.
Fluorine film: product name "50NS", manufactured by AGC Inc.
Acrylic resin film: product name "ACRYPLEN MBS121E", manufactured by Mitsubishi Chemical Corporation
Acrylic resin film: product name "ACRYPLEN HBS005", manufactured by Mitsubishi Chemical Corporation
Acrylic resin film: product name "ACRYPLEN HBS006", manufactured by Mitsubishi Chemical Corporation
Polyethylene terephthalate film (PET)

Some of the resin films used had a coating film on the surface thereof. The presence or absence of the coating film is as shown in the table.

[Example 1]

A pressure-sensitive adhesive composition was prepared according to the formulation described in Table 1. Purge with nitrogen gas was carried on the pressure-sensitive adhesive composition to remove dissolved oxygen. Subsequently, the pressure-sensitive adhesive composition was applied to a film (Bejitaron).

In that state, the lamp intensity of the chemical lamp was adjusted such that the intensity of irradiation with ultraviolet rays was 5 mW/cm$^2$, one side was irradiated with ultraviolet rays for 15 minutes to obtain an anticorrosive pressure-sensitive adhesive tape, and various evaluations were conducted. The results are shown in Table 1.

[Examples 2 to 27, Comparative Examples 1 to 2]

An anticorrosive pressure-sensitive adhesive tape was obtained in the same manner as in Example 1, except for preparing a pressure-sensitive adhesive composition according to the formulation described in Tables 1 to 3 and applying the pressure-sensitive adhesive composition on the film described in Tables 1 to 3. The results of the various evaluations are shown in Tables 1 to 3.

Table 1

| Items | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Pressure-sensitive adhesive formulation (parts by weight) | 2-Ethylhexyl acrylate | | 85 | 85 | 85 | 85 | 85 | 85 | 85 | 85 | 85 | 85 |
| | n-Butyl acrylate | | 15 | 15 | 15 | 15 | 15 | 15 | 15 | 15 | 15 | 15 |
| | Acrylic acid | | 5 | 5 | 5 | 5 | 5 | 5 | 5 | 5 | 5 | 5 |
| | Olefin polymer | | 10 | 10 | 10 | 10 | 10 | 10 | 10 | 10 | 10 | 10 |
| | Tackifier resin 1 | | 5 | 5 | 5 | 5 | 5 | 5 | 5 | 5 | 5 | 5 |
| | Tackifier resin 2 | | 5 | 5 | 5 | 5 | 5 | 5 | 5 | 5 | 5 | 5 |
| | Fine particle | | 0.8 | 0.8 | 0.8 | 0.8 | 0.8 | 0.8 | 0.8 | 0.8 | 0.8 | 0.8 |
| | Zinc particle | | 15 | 15 | 15 | 15 | 15 | 15 | 15 | 15 | 0 | 0 |
| | Electroconductive material | CNT | 0.025 | 0.025 | 0.025 | 0.025 | 0.025 | 0.025 | 0.025 | 0.025 | 0 | 0 |
| | | Carbon black | 0 | 0 | 0 | 0 | 0 | 0 | 0 | 0 | 0 | 0 |
| | Dispersant | | 0.025 | 0.025 | 0.025 | 0.025 | 0.025 | 0.025 | 0.025 | 0 | 0 | 0 |
| | Crosslinking agent | | 1 | 1 | 1 | 1 | 1 | 1 | 1 | 1 | 1 | 1 |
| | Polymerization initiator | | 0.2 | 0.2 | 0.2 | 0.2 | 0.2 | 0.2 | 0.2 | 0.2 | 0.2 | 0.2 |
| Film | Type | | Bejitaron | Pureron | Estron | LDPE | LDPE | 50 NS | Pureron | 50 NS | Bejitaron | Pureron |
| | Presence or absence of coating film | | Absent | Absent | Absent | Absent | Absent | Absent | Present | Absent | Present | Present |

(continued)

| | Items | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Parameter | Film | Thickness | μm | 75 | 65 | 100 | 50 | 50 | 50 | 105 | 50 | 125 | 105 |
| | | Difference between tensile loads (0.5%, 2.5%) | N/24 mm | 5 | 15 | 22 | 13 | 13 | 13 | 14 | 13 | 4 | 14 |
| | | Tensile elongation at break | % | 500 | 550 | 400 | 110 | 110 | 260 | 570 | 260 | 520 | 570 |
| | | Elmendorf tear strength | N | 1.2 | 0.8 | 0.84 | 1.16 | 1.16 | 2.4 | 0.64 | 2.5 | 1.12 | 0.64 |
| | Pressure-sensitive adhesive layer | Thickness | μm | 600 | 600 | 600 | 600 | 150 | 600 | 600 | 600 | 600 | 600 |
| | | Storaae modulus at 23°C | Pa | 600000 | 600000 | 600000 | 600000 | 300000 | 600000 | 600000 | 600000 | 600000 | 600000 |
| | | Presence or absence of formation of rust after test | Presence or absence | Absent | Absent | Absent | Absent | Absent | Absent | Absent | Absent | Absent | Absent |
| | | Adhesive force to stainless plate — Before test (initial) | N/25 mm | 50 | 50 | 50 | 50 | 22 | 50 | 50 | 52 | 65 | 65 |
| | | Adhesive force to stainless plate — After test | | 48 | 48 | 48 | 48 | 22 | 48 | 48 | 49 | 55 | 55 |

(continued)

| | Items | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Weather resistance | Gloss retention | % | 86 | 84 | 82 | 80 | 80 | 88 | 92 | 88 | 92 | 92 |
| | Evaluation | A, B, C | B | B | B | B | B | B | A | B | A | A |
| Projection conformability | Height of lifting portion | mm | 0 | 0 | 0 | 0 | 0 | 0 | 0 | 0 | 0 | 0 |
| | Tear | Presence or absence | Absent | Absent | Absent | Absent | Absent | Absent | Absent | Absent | Absent | Absent |
| | Evaluation | A, B, C | A | A | A | A | A | A | A | A | A | A |
| Separation | Distance separated | Separation distance (mm) | 0 | 0 | 0 | 0 | 18 | 0 | 0 | 0 | 0 | 0 |
| | Evaluation | A, B, C | A | A | A | A | B | A | A | A | A | A |
| Practical evaluation | Evaluation | S, A, B, C | A | A | A | A | A | A | A | A | A | A |
| Total evaluation | | | S | S | S | S | S | S | S | S | S | S |

Table 2

| Items | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| Pressure-sensitive adhesive formulation (parts by weight) | 2-Ethylhexyl acrylate | | 85 | 85 | 85 | 85 | 85 | 85 | 85 | 85 | 85 | 85 |
| | n-Butyl acrylate | | 15 | 15 | 15 | 15 | 15 | 15 | 15 | 15 | 15 | 15 |
| | Acrylic acid | | 5 | 5 | 5 | 5 | 5 | 5 | 5 | 5 | 5 | 5 |
| | Olefin polymer | | 10 | 10 | 10 | 10 | 10 | 10 | 10 | 10 | 10 | 10 |
| | Tackifier resin 1 | | 5 | 5 | 5 | 5 | 5 | 5 | 5 | 5 | 5 | 5 |
| | Tackifier resin 2 | | 5 | 5 | 5 | 5 | 5 | 5 | 5 | 5 | 5 | 5 |
| | Fine particle | | 0.8 | 0.8 | 0.8 | 0.8 | 0.8 | 0.8 | 0.8 | 0.8 | 0.8 | 0.8 |
| | Zinc particle | | 0 | 0 | 15 | 15 | 15 | 15 | 15 | 15 | 0 | 0 |
| | Electroconductive material | CNT | 0 | 0.025 | 0.025 | 0.2 | 0.025 | 0.025 | 0.025 | 0.025 | 0.025 | 0.025 |
| | | Carbon black | 0 | 0 | 0 | 0 | 0 | 0 | 0 | 0 | 0 | 0 |
| | Dispersant | | 0 | 0 | 0 | 0 | 0 | 0 | 0 | 0 | 0 | 0 |
| | Crosslinking agent | | 1 | 1 | 1 | 1 | 1 | 1 | 1 | 1 | 1 | 1 |
| | Polymerization initiator | | 0.2 | 0.2 | 0.2 | 0.2 | 0.2 | 0.2 | 0.2 | 0.2 | 0.2 | 0.2 |
| Film | Type | | Estron | 50NS | MBS121E | MBS121E | PET | MBS121E | MBS121E | MBS121E | MBS121E | PET |
| | Presence or absence of coating film | | Present | Absent | Absent | Absent | Present | Absent | Absent | Absent | Absent | Present |

| | Items | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|
| Parameter | Film | Thickness | μm | 150 | 50 | 75 | 75 | 105 | 75 | 75 | 75 | 75 | 105 |
| | | Difference between tensile loads (0.5%, 2.5%) | N/24 mm | 20 | 13 | 50 | 50 | 2 | 50 | 50 | 50 | 50 | 2 |
| | | Tensile elongation at break | % | 420 | 260 | 80 | 80 | 40 | 80 | 80 | 80 | 80 | 40 |
| | | Elmendorf tear strength | N | 0.72 | 2.5 | 0.04 | 0.04 | 1.2 | 0.04 | 0.04 | 0.04 | 0.04 | 1.2 |
| | Pressure-sensitive adhesive layer | Thickness | μm | 600 | 600 | 600 | 600 | 600 | 150 | 200 | 300 | 600 | 600 |
| | | Storage modulus at 23°C | Pa | 600000 | 600000 | 600000 | 800000 | 600000 | 300000 | 350000 | 400000 | 600000 | 600000 |
| | | Presence or absence of formation of rust after test | Presence or absence | Absent | Absent | Absent | Absent | Absent | Absent | Absent | Absent | Absent | Absent |
| | | Adhesive force to stainless plate — Before test (initial) | N/25 mm | 65 | 52 | 50 | 28 | 50 | 22 | 25 | 33 | 50 | 50 |
| | | Adhesive force to stainless plate — After test | | 55 | 49 | 48 | 30 | 48 | 22 | 25 | 30 | 48 | 48 |

(continued)

| | | Items | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|
| Practical evaluation | Weather re-sistance | Gloss retention | % | 92 | 88 | 90 | 90 | 92 | 90 | 90 | 90 | 90 | 92 |
| | | Evaluation | A, B, C | A | B | A | A | A | A | A | A | A | A |
| | Projection conformability | Height of lifting portion | mm | 0 | 0 | 2 | 2 | 2 | 2 | 2 | 2 | 2 | 2 |
| | | Tear | Presence or absence | Absent | Absent | Present | Present | Absent | Present | Present | Present | Present | Absent |
| | | Evaluation | A, B, C | A | A | C | C | C | C | C | C | C | C |
| | Separation | Distance separated | Separation distance (mm) | 0 | 0 | 0 | 14 | 0 | 18 | 17 | 14 | 0 | 0 |
| | | Evaluation | A, B, C | A | A | A | A | A | B | B | A | A | A |
| Total evaluation | | | S, A, B, C | S | S | A | A | A | A | A | A | A | A |

Table 3

| Items | | | Example 21 | Example 22 | Example 23 | Example 24 | Example 25 | Example 26 | Example 27 | Comparative Example 1 | Comparative Example 2 |
|---|---|---|---|---|---|---|---|---|---|---|---|
| Pressure-sensitive adhesive formulation (parts by weight) | 2-Ethylhexyl acrylate | | 85 | 85 | 85 | 85 | 85 | 85 | 85 | 85 | 85 |
| | n-Butyl acrylate | | 15 | 15 | 15 | 15 | 15 | 15 | 15 | 15 | 15 |
| | Acrylic acid | | 5 | 5 | 5 | 5 | 5 | 5 | 5 | 5 | 5 |
| | Olefin polymer | | 10 | 10 | 10 | 10 | 10 | 10 | 10 | 10 | 10 |
| | Tackifier resin 1 | | 5 | 5 | 5 | 5 | 5 | 5 | 5 | 5 | 5 |
| | Tackifier resin 2 | | 5 | 5 | 5 | 5 | 5 | 5 | 5 | 5 | 5 |
| | Fine particle | | 0.8 | 0.8 | 0.8 | 0.8 | 0.8 | 0.8 | 0.8 | 0.8 | 0.8 |
| | Zinc particle | | 0 | 0 | 0 | 15 | 15 | 15 | 15 | 15 | 15 |
| | Electroconductive material | CNT | 0.025 | 0.025 | 0.025 | 0.025 | 0.025 | 0.025 | 0.025 | 0.025 | 0 |
| | | Carbon black | 0 | 0 | 0 | 0 | 0 | 0 | 0 | 0 | 4 |
| | Dispersant | | 0 | 0 | 0 | 0.025 | 0.025 | 0.025 | 0 | 0.025 | 0 |
| | Crosslinking agent | | 1 | 1 | 1 | 1 | 1 | 1 | 1 | 5 | 1 |
| | Polymerization initiator | | 0.2 | 0.2 | 0.2 | 0.2 | 0.2 | 0.2 | 0.2 | 0.2 | 0.2 |
| Film | Type | | MBS121E | MBS121E | MBS121E | MBS121E | HBS005 | HBS006 | PET | HBS006 | MBS121E |
| | Presence or absence of coating film | | Absent | Absent | Absent | Absent | Absent | Absent | Absent | Absent | Present |

| Items | | | | Example 21 | Example 22 | Example 23 | Example 24 | Example 25 | Example 26 | Example 27 | Comparative Example 1 | Comparative Example 2 |
|---|---|---|---|---|---|---|---|---|---|---|---|---|
| Parameter | Film | Thickness | μm | 75 | 75 | 75 | 75 | 25 | 25 | 50 | 25 | 75 |
| | | Difference between tensile loads (0.5%, 2.5%) | N/24 mm | 50 | 50 | 50 | 50 | 13 | 31 | 3 | 31 | 50 |
| | | Tensile elongation at break | % | 80 | 80 | 80 | 80 | 70 | 110 | 35 | 110 | 80 |
| | | Elmendorf tear strength | N | 0.04 | 0.04 | 0.04 | 0.04 | 0.04 | 0.04 | 1 | 0.04 | 0.04 |
| | Pressure-sensitive adhesive layer | Thickness | μm | 150 | 200 | 300 | 600 | 600 | 600 | 600 | 600 | 600 |
| | | Storaae modulus at 23°C | Pa | 300000 | 350000 | 400000 | 600000 | 600000 | 600000 | 600000 | 1200000 | 1200000 |
| | | Presence or absence of formation of rust after test | Presence or absence | Absent | Absent | Absent | Absent | Absent | Absent | Absent | Present | Present |
| | | Adhesive force to stainless plate | Before test (initial) | N/25 mm | 22 | 25 | 33 | 50 | 50 | 50 | 52 | 8 | 18 |
| | | | After test | | 22 | 25 | 30 | 48 | 48 | 48 | 38 | 5 | 15 |

(continued)

| Items | | | | Example 21 | Example 22 | Example 23 | Example 24 | Example 25 | Example 26 | Example 27 | Comparative Example 1 | Comparative Example 2 |
|---|---|---|---|---|---|---|---|---|---|---|---|---|
| Practical evaluation | Weather re-sistance | Gloss retention | % | 90 | 90 | 90 | 90 | 92 | 92 | 60 | 92 | 90 |
| | | Evaluation | A, B, C | A | A | A | A | A | A | C | A | A |
| | Projection con-formability | Height of lifting por-tion | mm | 2 | 2 | 2 | 2 | 2 | 2 | 2 | 2 | 2 |
| | | Tear | Presence or absence | Present | Present | Present | Present | Present | Absent | Absent | Absent | Present |
| | | Evaluation | A, B, C | C | C | C | C | C | C | C | C | C |
| | Separation | Distance separated | Separation distance (mm) | 18 | 17 | 14 | 0 | 0 | 0 | 0 | 36 | 27 |
| | | Evaluation | A, B, C | B | B | A | A | A | A | A | C | C |
| Total evaluation | | | S, A, B, C | A | A | A | A | A | A | B | C | C |

32

Each of the components in Tables 1 to 3 are as follows.

Olefin polymer: product name "L-1253", manufactured by KURARAY CO., LTD., hydrogenated polybutadiene having a (meth)acryloyl group at one end.

Tackifier resin 1: product name "ARKON P140", manufactured by Arakawa Chemical Industries, Ltd., hydrogenated petroleum resin, softening point 140°C

Tackifier resin 2: product name "ARKON P100", manufactured by Arakawa Chemical Industries, Ltd., hydrogenated petroleum resin, softening point 100°C

Fine particle: product name "Cel-star Z-27", manufactured by Tokai Kogyo, K.K., glass balloon

Crosslinking agent: product name "TEAI-1000", manufactured by NIPPON SODA CO., LTD.

Polymerization initiator: 2,2-dimethoxy-2-phenylacetophenone

Zinc particle: product name "Zinc powder #40", manufactured by SAKAI CHEMICAL INDUSTRY CO., LTD., average particle size 50 $\mu$m

Carbon nanotube (CNT), product name "JENOTUBE 8A", manufactured by JEIO, average diameter 6 to 9 nm, average length 100 to 200 $\mu$m

Carbon black, product name "AT-NO. 15S", Oriental Industry Co. LTD., average particle size 13 $\mu$m

Dispersant: product name "S-LEC BX-L", manufactured by SEKISUI CHEMICAL CO., LTD., polyvinyl butyral resin

The anticorrosive pressure-sensitive adhesive tapes of Examples 1 to 27, which are anticorrosive pressure-sensitive adhesive tapes preventing generation of rust in the cyclic corrosion test and having an adhesive force after the cyclic corrosion test of 20 N/25 mm or more (first invention), had an excellent anticorrosive property and was further able to maintain a high adhesive force for a long period. The anticorrosive pressure-sensitive adhesive tapes also achieved favorable results in practical evaluation on separation.

In the anticorrosive pressure-sensitive adhesive tapes of Examples 1 to 26, which are anticorrosive pressure-sensitive adhesive tapes having a gloss retention of 80% or more of the base material after the accelerated weather resistance test and having an adhesive force after the cyclic corrosion test of 20 N/25 mm or more (second invention), deterioration did not proceed even after ultraviolet irradiation over a long period, and a good appearance was able to be maintained while the adhesive force was maintained at a high level.

The anticorrosive pressure-sensitive adhesive tapes of Examples 1 to 12, which are anticorrosive pressure-sensitive adhesive tapes having a difference between the tensile load at 2.5% elongation and the tensile load at 0.5% elongation of 30 N/24 mm or less and a tensile elongation at break of 100% or more (third invention), had conformability to a face to be adhered and were able to be deposited even on a face to be adhered having a complex shape without occurrence of a tear.

Reference Signs List

10 anticorrosive pressure-sensitive adhesive tape
11 pressure-sensitive adhesive layer
12 base material
13 metal layer
20 L-shaped SUS plate
20A face to be adhered
h height
t width

**Claims**

1. An anticorrosive pressure-sensitive adhesive tape comprising a pressure-sensitive adhesive layer, the anticorrosive pressure-sensitive adhesive tape preventing generation of rust in a cyclic corrosion test in accordance with Cycle D in JIS K5600-7-9 and having an adhesive force after the cyclic corrosion test of 20 N/25 mm or more.

2. The anticorrosive pressure-sensitive adhesive tape according to claim 1, further comprising a base material, wherein the pressure-sensitive adhesive layer is provided on one side of the base material.

3. The anticorrosive pressure-sensitive adhesive tape according to claim 2, wherein the base material has a gloss retention of 80% or more after an accelerated weather resistance test in accordance with Cycle A in JIS K5600-7-7 is conducted for 500 hours.

4. The anticorrosive pressure-sensitive adhesive tape according to claim 2 or 3, wherein the base material has a difference between a tensile load at 2.5% elongation and a tensile load at 0.5% elongation of 30 N/24 mm or less and has a tensile elongation at break of 100% or more.

5. An anticorrosive pressure-sensitive adhesive tape comprising a base material and a pressure-sensitive adhesive layer provided on one side of the base material, wherein
the base material has a gloss retention of 80% or more after an accelerated weather resistance test in accordance with Cycle A in JIS K5600-7-7 is conducted for 500 hours, and an adhesive force after a cyclic corrosion test in accordance with Cycle D in JIS K5600-7-9 is 20 N/25 mm or more.

6. An anticorrosive pressure-sensitive adhesive tape comprising a base material and a pressure-sensitive adhesive layer provided on at least one side of the base material, wherein
the base material has a difference between a tensile load at 2.5% elongation and a tensile load at 0.5% elongation of 30 N/24 mm or less, and a tensile elongation at break of 100% or more.

7. The anticorrosive pressure-sensitive adhesive tape according to any one of claims 2 to 6, wherein the base material has an Elmendorf tear strength measured by an Elmendorf tear method in accordance with JIS K7128-2 (1998) of 0.6 N or more.

8. The anticorrosive pressure-sensitive adhesive tape according to any one of claims 2 to 7, wherein the base material is a resin film having a coating film on a surface thereof.

9. The anticorrosive pressure-sensitive adhesive tape according to any one of claims 2 to 8, wherein the base material is at least one selected from an acrylic film and a fluorine film.

10. The anticorrosive pressure-sensitive adhesive tape according to any one of claims 1 to 9, wherein the pressure-sensitive adhesive layer has a thickness of 25 $\mu$m or more.

11. The anticorrosive pressure-sensitive adhesive tape according to any one of claims 1 to 10, wherein the pressure-sensitive adhesive layer contains a metal having a lower potential than that of iron.

12. The anticorrosive pressure-sensitive adhesive tape according to claim 11, wherein the metal having a lower potential than that of iron is zinc.

13. The anticorrosive pressure-sensitive adhesive tape according to claim 11 or 12, wherein the pressure-sensitive adhesive layer contains an electroconductive material other than the metal having a lower potential than that of iron.

14. The anticorrosive pressure-sensitive adhesive tape according to claim 13, wherein the electroconductive material is a carbon nanotube.

15. The anticorrosive pressure-sensitive adhesive tape according to any one of claims 1 to 14, wherein the pressure-sensitive adhesive layer is made with a pressure-sensitive acrylic adhesive.

16. The anticorrosive pressure-sensitive adhesive tape according to claim 1, comprising the pressure-sensitive adhesive layer and a metal layer provided on one side of the pressure-sensitive adhesive layer, the metal layer being a layer of a metal having a lower potential than that of iron.

17. The anticorrosive pressure-sensitive adhesive tape according to any one of claims 2 to 16, comprising a metal layer between the base material and the pressure-sensitive adhesive layer, the metal layer being a layer of a metal having a lower potential than that of iron.

18. The anticorrosive pressure-sensitive adhesive tape according to claim 16 or 17, wherein the metal layer is a layer of zinc.

Fig. 1

Fig. 2

Fig. 3

Fig. 4

Fig. 5

## INTERNATIONAL SEARCH REPORT

| International application No. |
|---|
| **PCT/JP2022/010105** |

### A. CLASSIFICATION OF SUBJECT MATTER

*B32B 27/00*(2006.01)i; *C09J 9/02*(2006.01)i; *C09J 11/04*(2006.01)i; *C23F 11/00*(2006.01)i; *C09J 133/04*(2006.01)i; *C09J 201/00*(2006.01)i; *C23F 13/02*(2006.01)i; *C09J 7/24*(2018.01)i; *C09J 7/29*(2018.01)i; *C09J 7/38*(2018.01)i
FI:   C09J7/38; B32B27/00 M; C09J7/24; C09J7/29; C09J9/02; C09J11/04; C09J133/04; C09J201/00; C23F11/00 G; C23F13/02 A

According to International Patent Classification (IPC) or to both national classification and IPC

### B. FIELDS SEARCHED

Minimum documentation searched (classification system followed by classification symbols)

B32B27/00; C09J9/02; C09J11/04; C23F11/00; C09J133/04; C09J201/00; C23F13/02; C09J7/24; C09J7/29; C09J7/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-127606 A (SEKISUI CHEM. CO., LTD.) 01 August 2019 (2019-08-01) claims, paragraphs [0005], [0012]-[0017], [0021]-[0022], [0024]-[0036], [0046]-[0048], [0055]-[0064], fig. 6, examples | 1-18 |
| X | JP 2021-001281 A (SEKISUI CHEM. CO., LTD.) 07 January 2021 (2021-01-07) claims, paragraphs [0005], [0016], [0018]-[0028], [0030]-[0031], [0043]-[0044], examples | 1-7, 9-15 |
| X | JP 2019-157603 A (SEKISUI CHEM. CO., LTD.) 19 September 2019 (2019-09-19) claims, paragraphs [0009], [0020]-[0033], examples | 1-15 |
| A | JP 2007-508439 A (POLYONE CORP.) 05 April 2007 (2007-04-05) entire text | 1-18 |
| A | JP 9-242982 A (MITSUI MINING & SMELTING CO., LTD.) 16 September 1997 (1997-09-16) entire text | 1-18 |

☑ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 May 2022** | **31 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/010105**

**C.    DOCUMENTS CONSIDERED TO BE RELEVANT**

| Category* | Citation of document, with indication, where appropriate, of the relevant passages | Relevant to claim No. |
|---|---|---|
| A | JP 11-278878 A (SHIMIZU CORP.) 12 October 1999 (1999-10-12)<br>entire text | 1-18 |
| A | JP 9-228079 A (TOGO SEISAKUSYO KK) 02 September 1997 (1997-09-02)<br>entire text | 1-18 |
| A | JP 2012-131915 A (NITTO DENKO CORP.) 12 July 2012 (2012-07-12)<br>entire text | 1-18 |

Form PCT/ISA/210 (second sheet) (January 2015)

**INTERNATIONAL SEARCH REPORT**
**Information on patent family members**

International application No.

**PCT/JP2022/010105**

| Patent document cited in search report | Publication date (day/month/year) | Patent family member(s) | Publication date (day/month/year) |
|---|---|---|---|
| JP 2019-127606 A | 01 August 2019 | (Family: none) | |
| JP 2021-001281 A | 07 January 2021 | (Family: none) | |
| JP 2019-157603 A | 19 September 2019 | (Family: none) | |
| JP 2007-508439 A | 05 April 2007 | US 2007/0111015 A1 entire text WO 2005/044928 A1 EP 1682623 A1 KR 10-2006-0066751 A CN 1871311 A | |
| JP 9-242982 A | 16 September 1997 | (Family: none) | |
| JP 11-278878 A | 12 October 1999 | (Family: none) | |
| JP 9-228079 A | 02 September 1997 | US 5985957 A entire text | |
| JP 2012-131915 A | 12 July 2012 | US 2012/0164446 A1 entire text CN 102568543 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9242982 A

- JP 2019127606 A